# EUROPÄISCHE PATENTSCHRIFT

(11) **EP 4 159 499 B1**
(45) Veröffentlichungstag und Bekanntmachung des Hinweises auf die Patenterteilung: **22.05.2024**
(21) Anmeldenummer: 22197207.8
(22) Anmeldetag: 22.09.2022
(51) Int. Cl.: B60H 1/34, F24F 13/14, F24F 13/15

(54) **LUFTAUSSTRÖMER FÜR EIN FAHRZEUG**
AIR VENT FOR A VEHICLE
DIFFUSEUR D'AIR POUR UN VÉHICULE

(30) Priorität: 30.09.2021 DE 102021125427
(43) Veröffentlichungstag der Anmeldung: 05.04.2023
(73) Patentinhaber: Illinois Tool Works, Inc., Glenview, Illinois 60025 (US)
(72) Erfinder: GROBEN, Manfred, Glenview, Illinois 60025 (US); MÜLLER, Thomas, Glenview, Illinois 60025 (US)
(74) Vertreter: Meissner Bolte Partnerschaft mbB

(56) Entgegenhaltungen:
- WO-A1-2018/088399
- DE-A1-102012 015 519
- US-A1- 2018 162 199

## Beschreibung

Die Erfindung betrifft einen Luftausströmer für ein Fahrzeug. Der Luftausströmer umfasst ein Gehäuse mit einer Eintrittsöffnung und einer Austrittsöffnung, wobei das Gehäuse einen Luftkanal für von der Eintrittsöffnung zu der Austrittsöffnung strömende Luft bildet.

Derartige Luftausströmer dienen der Zufuhr von Luft in einen Fahrzeuginnenraum. Hierbei kann von außerhalb des Fahrzeugs zugeführte Frischluft oder dem Fahrzeuginnenraum entnommene Luft über die Eintrittsöffnung in den durch das Gehäuse gebildeten Luftkanal geführt, durch diesen hindurch und durch die Austrittsöffnung in den Innenraum des Fahrzeugs geleitet werden. Bei dem Fahrzeug kann es sich beispielsweise um einen PKW oder einen LKW handeln.

Zur Ablenkung der Luft von einer Hauptströmrichtung können in dem Gehäuse verstellbare Luftleitelemente, beispielsweise verschwenkbare Luftleitlamellen, angeordnet sein.

Es ist ferner bekannt, in dem Luftkanal des Luftausströmers ein zwischen einer Offenstellung und einer Schließstellung verstellbar gelagertes Verschlusselement vorzusehen, über welches der freie Strömungsquerschnitt des Luftkanals verändert und insbesondere auf null reduziert werden kann. Somit kann die durch den Luftkanal fließende Luftströmung gedrosselt bzw. in der Schließstellung des Verschlusselements vollständig unterbrochen werden.

Beispielsweise betrifft die Druckschrift DE 10 2009 051 075 A1 einen Luftausströmer zur Zuführung von Luft in eine Fahrgastzelle eines Kraftfahrzeugs mit einer schwenkbar in einer Luftzufuhr gelagerten Klappe zur Drosselung einer Luftströmung. Ferner sind bei dem aus diesem Stand der Technik bekannten Luftausströmer schwenkbar gelagerte Lamellen vorgesehen, um die ausströmende Luft zu richten.

Die Druckschrift US 2018/162199 A1 betrifft einen Luftausströmer mit den Merkmalen des Oberbegriffs des unabhängigen Patentanspruchs 1.

Weitere Luftausströmer sind aus der Druckschrift WO 2018/088399 A1 und der Druckschrift DE 10 2012 015 519 A1 bekannt.

Aufgabe der vorliegenden Erfindung ist es, einen Luftausströmer für ein Fahrzeug anzugeben, welcher bei geringem Bauraumbedarf und insbesondere mit einer reduzierten Anzahl von Komponenten unterschiedliche Belüftungsszenarien realisieren kann.

Diese Aufgabe wird erfindungsgemäß durch den Gegenstand des unabhängigen Patentanspruchs 1 gelöst, wobei vorteilhafte Weiterbildungen des erfindungsgemäßen Luftausströmers in den abhängigen Patentansprüchen angegeben sind.

Demgemäß betrifft die vorliegende Erfindung einen Luftausströmer für ein Fahrzeug, wobei der Luftausströmer ein Gehäuse mit einem einen Lufteintrittsbereich des Gehäuses mit einem gegenüberliegenden Luftaustrittsbereich des Gehäuses verbindenden und sich in einer Hauptströmrichtung des Gehäuses erstreckenden Luftkanal aufweist. Darüber hinaus weist der erfindungsgemäße Luftausströmer eine zumindest bereichsweise in dem Luftkanal des Gehäuses aufgenommene Lamellenanordnung auf.

Der erfindungsgemäße Luftausströmer zeichnet sich dadurch aus, dass die Lamellenanordnung in ein erstes Lamellenpaket mit mehreren ersten Lamellen und in mindestens ein zweites Lamellenpaket mit mehreren zweiten Lamellen aufgeteilt ist. Dabei ist vorgesehen, dass jede einzelne Lamelle des ersten und zweiten Lamellenpakets um eine sich in eine erste Richtung, insbesondere vertikale Richtung, erstreckende Drehachse relativ zu dem Gehäuse verschwenkbar ist.

Um mit dem erfindungsgemäßen Luftausströmer verschiedene Belüftungsszenarien realisieren zu können, ist erfindungsgemäß vorgesehen, dass die Lamellen des ersten und des mindestens einen zweiten Lamellenpakets gemeinsam relativ zu dem Gehäuse zwischen einer ersten Stellung und einer zweiten Stellung verschwenkbar sind.

In der ersten Stellung der ersten Lamellen des ersten Lamellenpakets und der zweiten Lamellen des zweiten Lamellenpakets liegen die Lamellen in einer Neutralstellung vor. Die Neutralstellung entspricht dabei der Geradeaus-Stellung des Luftausströmers.

In der zweiten Stellung der ersten Lamellen des ersten Lamellenpakets und der zweiten Lamellen des zweiten Lamellenpakets liegen die Lamellen in einer ersten Drehrichtung aus ihrer Neutralstellung verschwenkt vor und sind derart schräg zur Hauptströmrichtung des Luftausströmers ausgerichtet, dass von den Lamellen eine Luftablenkung in eine zweite Richtung bewirkt wird.

Erfindungsgemäß ist vorgesehen, dass die Lamellen des ersten Lamellenpakets alleine oder die Lamellen des ersten Lamellenpakets und die Lamellen des mindestens einen zweiten Lamellenpakets gemeinsam ferner relativ zu dem Gehäuse in eine dritte Stellung verschwenkbar sind.

In der dritten Stellung liegen die zweiten Lamellen des mindestens einen zweiten Lamellenpakets in der ersten Drehrichtung aus einer Neutralstellung verschwenkt vor und sind derart schräg zur Hauptströmrichtung des Luftausströmers ausgerichtet, dass von den zweiten Lamellen eine Luftablenkung in die zweite Richtung bewirkt wird.

In der dritten Stellung liegen ferner die ersten Lamellen des ersten Lamellenpakets in einer zweiten Drehrichtung aus ihrer Neutralstellung verschwenkt vor und sind derart schräg zur Hauptströmrichtung des Luftauströmers ausgerichtet, dass von den ersten Lamellen eine Luftablenkung in eine zur zweiten Richtung entgegengesetzte Richtung bewirkt wird. Dabei ist die zweite Drehrichtung verschieden von der ersten Drehrichtung.

Gemäß Ausführungsformen kann die dritte Stellung der Lamellen des zweiten Lamellenpakets identisch sein mit der zweiten Stellung der Lamellen des zweiten Lamellenpakets.

In der dritten Stellung der Lamellen des ersten Lamellenpakets und der Lamellen des zweiten Lamellenpakets erfolgt eine Aufspreizung des Luftstroms, so dass dieser als diffuser Luftstrom den Luftaustrittsbereich des Gehäuses verlässt.

Andererseits ist in der zweiten Stellung der Lamellen des ersten Lamellenpakets und der Lamellen des mindestens einen zweiten Lamellenpakets eine Luftablenkung im Hinblick zur Hauptströmrichtung des Luftausströmers realisierbar.

Bevorzugt ist bei dem erfindungsgemäßen Luftausströmer vorgesehen, dass die Lamellen des ersten Lamellenpakets und die Lamellen des mindestens einen zweiten Lamellenpakets ferner gemeinsam relativ zu dem Gehäuse des Luftausströmers zwischen der ersten Stellung (Neutralstellung) und einer weiteren, vierten Stellung verschwenkbar sind. In dieser vierten Stellung liegen die Lamellen des ersten Lamellenpakets und die Lamellen des mindestens einen zweiten Lamellenpakets in der zweiten Drehrichtung aus ihrer Neutralstellung verschwenkt vor und sie sind derart schräg zur Hauptströmrichtung des Luftausströmers ausgerichtet, dass von diesen Lamellen eine Luftablenkung in die zur zweiten Richtung entgegengesetzte Richtung bewirkt wird.

Alternativ oder zusätzlich kann vorgesehen sein, dass die Lamellen des ersten Lamellenpakets und die Lamellen des mindestens einen zweiten Lamellenpakets gemeinsam relativ zu dem Gehäuse des Luftausströmers in eine fünfte Stellung verschwenkbar sind, in welcher die Lamellen in der zweiten Drehrichtung aus ihrer Neutralstellung derart verschwenkt vorliegen, dass mit den Lamellen der Luftkanal des Gehäuses zumindest im Wesentlichen blockiert wird. Somit dienen die Lamellen in ihrer fünften Stellung als Verschlusselement.

Gemäß der Erfindung ist vorgesehen, dass zum bedarfsweisen Manipulieren der Lamellenanordnung der Luftausströmer ein insbesondere manuell betätigbares Bedienelement aufweist, welches über eine Kinematik mit den ersten Lamellen des ersten Lamellenpakets und den zweiten Lamellen des mindestens einen zweiten Lamellenpakets wirkverbunden ist.

Insbesondere ist in diesem Zusammenhang vorgesehen, dass die Kinematik derart ausgebildet ist, dass in einer ersten Stellung des Bedienelements die ersten Lamellen des ersten Lamellenpakets und die zweiten Lamellen des mindestens einen zweiten Lamellenpakets jeweils in ihrer Neutralstellung vorliegen, während in einer zweiten Stellung des Bedienelements die ersten Lamellen des ersten Lamellenpakets und die zweiten Lamellen des mindestens einen zweiten Lamellenpakets jeweils in ihrer zweiten Stellung vorliegen, wobei in einer dritten Stellung des Bedienelements die Lamellen des ersten Lamellenpakets und die Lamellen des mindestens einen zweiten Lamellenpakets jeweils in ihrer dritten Stellung vorliegen.

Denkbar in diesem Zusammenhang ist ferner, dass in einer vierten Stellung des Bedienelements die Lamellen des ersten Lamellenpakets und die Lamellen des mindestens einen zweiten Lamellenpakets jeweils in ihrer vierten Stellung vorliegen, während in einer fünften Stellung des Bedienelements die Lamellen des ersten Lamellenpakets und die Lamellen des mindestens einen zweiten Lamellenpakets jeweils in ihrer fünften Stellung vorliegen.

Insbesondere ist in diesem Zusammenhang vorgesehen, dass die vierte Stellung des Bedienelements zwischen der ersten und fünften Stellung des Bedienelements liegt. Alternativ oder zusätzlich hierzu ist es bevorzugt, dass die zweite Stellung des Bedienelements zwischen der ersten und dritten Stellung des Bedienelements liegt.

Zur Realisierung der Kinematik des erfindungsgemäßen Luftausströmers kommen verschiedene Ausführungsformen in Frage:
Erfindungsgemäß ist vorgesehen, dass die Kinematik des Luftausströmers einen Übertragungsmechanismus aufweist, welcher ausgebildet ist, eine Bewegung der ersten Lamellen des ersten Lamellenpakets auf die zweiten Lamellen des mindestens einen zweiten Lamellenpakets zu übertragen, wobei eine die Abhängigkeit der Bewegung der zweiten Lamellen des mindestens einen zweiten Lamellenpakets von der Bewegung der ersten Lamellen des ersten Lamellenpakets beschreibende Übertragungsfunktion des Übertragungsmechanismus eine in Beziehung zu einer Stellung des Bedienelements stehende Übertragungsfunktion ist.

Mit anderen Worten, abhängig von der jeweiligen Stellung des Bedienelements wird mit Hilfe des Übertragungsmechanismus eine (Dreh-) Bewegung der ersten Lamellen des ersten Lamellenpakets auf die zweiten Lamellen des mindestens einen zweiten Lamellenpakets übertragen.

Gemäß der Erfindung weist die Kinematik des Luftausströmers eine den ersten Lamellen des ersten Lamellenpakets zugeordnete erste Koppelstange auf, mit welcher die ersten Lamellen derart wirkverbunden sind, dass beim Betätigen der ersten Koppelstange und insbesondere beim Bewegen der ersten Koppelstange in der zweiten Richtung relativ zu dem Gehäuse des Luftausströmers die ersten Lamellen, das heißt die Lamellen des ersten Lamellenpakets, relativ zu dem Gehäuse verschwenkt werden.

Ferner weist die Kinematik des Luftausströmers eine von der ersten Koppelstange separat ausgeführte und den zweiten Lamellen des mindestens einen zweiten Lamellenpakets zugeordnete zweite Koppelstange auf, mit welcher die zweiten Lamellen derart wirkverbunden sind, dass beim Betätigen der zweiten Koppelstange und insbesondere beim Bewegen der zweiten Koppelstange in der zweiten Richtung relativ zu dem Gehäuse des Luftausströmers die zweiten Lamellen relativ zu dem Gehäuse verschwenkt werden.

Der Übertragungsmechanismus ist ausgebildet, eine Bewegung der ersten Koppelstange auf die zweite Koppelstange zu übertragen. Dabei ist eine die Abhängigkeit der Bewegung der zweiten Koppelstange von der Bewegung der ersten Koppelstange beschreibende Übertragungsfunktion des Übertragungsmechanismus eine in Beziehung zu der Stellung des Bedienelements stehende Übertragungsfunktion.

Gemäß Realisierungen des Übertragungsmechanismus (nicht Teil der beanspruchten Erfindung) ist dieser derart ausgebildet bzw. ist die Übertragungsfunktion des Übertragungsmechanismus derart gewählt, dass beim Überführen des Bedienelements von seiner zweiten Stellung in seine dritte Stellung und umgekehrt die mindestens eine erste Lamelle des ersten Lamellenpakets in ihrer zweiten Stellung verbleibt und die mindestens eine zweite Lamelle des zweiten Lamellenpakets von ihrer zweiten Stellung in ihre dritte Stellung verschwenkt wird.

Alternativ hierzu ist der Übertragungsmechanismus derart ausgebildet bzw. die Übertragungsfunktion des Übertragungsmechanismus derart gewählt, dass beim Überführen des Bedienelements von seiner zweiten Stellung in seine dritte Stellung und umgekehrt eine Drehbewegung der ersten Lamellen des ersten Lamellenpakets so auf die zweiten Lamellen des zweiten Lamellenpakets übertragen wird, dass sich die zweiten Lamellen in der gleichen Drehrichtung wie die ersten Lamellen jedoch mit einer höheren Winkelgeschwindigkeit bewegen.

Alternativ oder zusätzlich zu den zuvor genannten, den Übertragungsmechanismus betreffenden Ausgestaltungen ist gemäß Weiterbildungen der Erfindung vorgesehen, dass der Übertragungsmechanismus derart ausgebildet ist bzw. die Übertragungsfunktion des Übertragungsmechanismus derart gewählt ist, dass beim Überführen des Bedienelements von seiner ersten Stellung in seine zweite Stellung, von seiner ersten Stellung in seine vierte Stellung und/oder von seiner vierten Stellung in seine fünfte Stellung (und jeweils umgekehrt) eine Drehbewegung der ersten Lamellen des ersten Lamellenpakets so auf die zweiten Lamellen des mindestens einen zweiten Lamellenpakets übertragen wird, dass sich die zweiten Lamellen in der gleichen Drehrichtung wie die ersten Lamellen bewegen/drehen.

Ferner alternativ oder zusätzlich hierzu ist es denkbar, dass der Übertragungsmechanismus derart ausgebildet ist bzw. die Übertragungsfunktion des Übertragungsmechanismus derart gewählt ist, dass beim Überführen des Bedienelements von seiner ersten Stellung in seine zweite Stellung, von seiner ersten Stellung in seine vierte Stellung und/oder von seiner vierten Stellung in seine fünfte Stellung (und jeweils umgekehrt) eine Drehbewegung der ersten Lamellen des ersten Lamellenpakets so auf die zweiten Lamellen des mindestens einen zweiten Lamellenpakets übertragen wird, dass sich die zweiten Lamellen mit einer von der Winkelgeschwindigkeit der ersten Lamellen unterschiedlichen Winkelgeschwindigkeit bewegen.

Gemäß besonders leicht zu realisierenden aber dennoch effektiven Ausgestaltungen der Erfindung weist der erfindungsgemäß beanspruchte Übertragungsmechanismus ein erstes Hebelelement auf, welches an einer der ersten Lamellen des ersten Lamellenpakets befestigt oder integral ausgeführt ist, und zwar vorzugsweise im Bereich der Drehachse der entsprechenden ersten Lamelle. Der Übertragungsmechanismus weist ferner ein zweites Hebelelement auf, welches an einer der zweiten Lamellen des mindestens einen zweiten Lamellenpakets befestigt oder integral ausgeführt ist, und zwar vorzugsweise im Bereich der Drehachse der entsprechenden zweiten Lamelle.

Ferner weist der Übertragungsmechanismus einen Kopplungsmechanismus auf, über den das erste Hebelelement mit dem zweiten Hebelelement gekoppelt ist. Dabei ist vorgesehen, dass eine die Abhängigkeit einer Bewegung des zweiten Hebelelements von der Bewegung des ersten Hebelelements beschreibende Übertragungsfunktion des Kopplungsmechanismus eine in Beziehung zu der Stellung des Bedienelements stehende Übertragungsfunktion ist.

Somit ist insbesondere also vorgesehen, dass über den Kopplungsmechanismus das erste Hebelelement mit dem zweiten Hebelelement gekoppelt ist, wobei eine Bewegung des ersten Hebelelements auf das zweite Hebelelement übertragbar ist, wobei jedoch die Übertragungsfunktion, das heißt die Abhängigkeit der Bewegung des zweiten Hebelelements von der Bewegung des ersten Hebelelements, insbesondere von der jeweiligen Stellung des Bedienelements abhängt.

Hierzu kann der Kopplungsmechanismus eine Kopplungsstange aufweisen, wobei das erste Hebelelement um eine sich in die erste Richtung erstreckende Drehachse drehbar mit einem ersten Endbereich der Kopplungsstange verbunden ist.

Vorzugsweise weist der Kopplungsmechanismus ferner einen Hebelmechanismus mit einem um eine sich in die erste Richtung erstreckende erste Schwenkachse drehbar gelagerten ersten Hebel und einem um eine sich in die erste Richtung erstreckende zweite Schwenkachse drehbar gelagerten zweiten Hebel auf. Dabei ist der erste Hebel über einen Getriebemechanismus mit dem zweiten Hebel derart wirkverbunden, dass eine Drehung des zweiten Hebels um die zweite Schwenkachse auf den ersten Hebel übertragen wird, so dass dieser um die erste Schwenkachse verdreht wird. Der erste Hebel ist dabei insbesondere um eine sich in die erste Richtung erstreckende Drehachse drehbar mit einem zweiten Endbereich der Kopplungsstange wirkverbunden.

Bei dem Getriebemechanismus handelt es sich vorzugsweise um ein Zahnradgetriebe, so dass der Getriebemechanismus also durch eine Zahnpaarung gebildet wird. Selbstverständlich kommen aber auch andere Realisierungen für den Getriebemechanismus in Frage.

Gemäß Weiterbildungen der zuvor genannten Ausführungsform ist vorgesehen, dass die erste Schwenkachse, um welche der erste Hebel des Hebelmechanismus drehbar gelagert ist, im Bereich der Drehachse der entsprechenden zweiten Lamelle des mindestens einen zweiten Lamellenpakets, an welchem das zweite Hebelelement befestigt oder integral ausgeführt ist, vorgesehen ist. Die erste Schwenkachse, um welche der erste Hebel des Hebelmechanismus drehbar gelagert ist, stimmt dabei vorzugsweise mit der Drehachse der entsprechenden zweiten Lamelle des mindestens einen zweiten Lamellenpakets überein, an welchem das zweite Hebelelement befestigt oder integral ausgeführt ist.

Gemäß einer ersten Ausführungsvariante der zuvor beschriebenen Kinematik ist vorgesehen, dass der zweite Hebel des Hebelmechanismus an oder auf dem zweiten Hebelelement relativ zu dem zweiten Hebelelement drehbar gelagert ist. Dabei ist dem zweiten Hebel ein Vorspannelement, insbesondere in Gestalt eines Federelements, zugeordnet, welches den zweiten Hebel gegen einen ersten Anschlag des zweiten Hebelelements vorspannt, so dass bei einer Drehung des zweiten Hebels das zweite Hebelelement um eine sich in die erste Richtung erstreckende Drehachse mitgedreht wird.

Gemäß Realisierungen dieses Aspekts ist vorgesehen, dass dem zweiten Hebelelement ein vorzugsweise mit dem Gehäuse des Luftausströmers verbundener zweiter Anschlag zugeordnet ist, um eine Drehbewegung des zweiten Hebelelements um die sich in die erste Richtung erstreckende Drehachse zu begrenzen.

Gemäß Weiterbildungen dieser Ausgestaltung ist ein Einrastmechanismus vorgesehen zum lösbaren Arretieren des ersten oder zweiten Hebels an dem zweiten Hebelelement, wenn sich die Lamellen des ersten Lamellenpakets und die Lamellen des mindestens einen zweiten Lamellenpakets in ihrer dritten Stellung befinden. Vorzugsweise weist der Einrastmechanismus ein insbesondere dem ersten oder zweiten Hebel oder dem zweiten Hebelelement zugeordnetes federndes Druckstück auf, welches ausgebildet ist, in eine Vertiefung insbesondere des zweiten Hebelelements oder des ersten oder zweiten Hebels einzurasten, wenn sich die Lamellen des ersten Lamellenpakets und die Lamellen des mindestens einen zweiten Lamellenpakets in ihrer dritten Stellung befinden.

Ferner ist es in diesem Zusammenhang denkbar, dass das zweite Hebelelement eine Führung oder Laufbahn aufweist, auf welcher sich das federnde Druckstück des ersten Hebels bewegt, wenn der erste Hebel relativ zu dem zweiten Hebelelement verschwenkt wird.

Gemäß einer zweiten Ausführungsvariante der Kinematik des erfindungsgemäßen Luftausströmers ist vorgesehen, dass der Hebelmechanismus einen um die erste Schwenkachse des ersten Hebels drehbar gelagerten dritten Hebel aufweist, wobei der zweite Hebel über einen zweiten Getriebemechanismus mit dem zweiten Hebelelement derart wirkverbunden ist, dass eine Drehung des zweiten Hebels um die zweite Drehachse auf das zweite Hebelelement übertragen wird.

Der zweite Getriebemechanismus wird vorzugsweise durch eine Zahnpaarung gebildet, wobei das Übersetzungsverhältnis des zweiten Getriebemechanismus vorzugsweise verschieden von dem Übersetzungsverhältnis des Getriebemechanismus ist, über den der erste Hebel mit dem zweiten Hebel wirkverbunden ist.

Gemäß einer Realisierung der zuvor beschriebenen zweiten Ausführungsvariante der Kinematik des erfindungsgemäßen Luftausströmers ist vorgesehen, dass der dritte Hebel des Hebelmechanismus relativ zu dem zweiten Hebel drehbar gelagert ist, wobei dem zweiten Hebel ein Vorspannelement, insbesondere in Gestalt eines Federelements, zugeordnet ist, welches den zweiten Hebel gegen einen ersten Anschlag des dritten Hebels vorspannt. Vorzugsweise ist dem dritten Hebel ein insbesondere mit dem Gehäuse des Luftausströmers verbundener zweiter Anschlag zugeordnet, um eine Drehbewegung des dritten Hebels um die erste Schwenkachse des ersten Hebels zu begrenzen.

Gemäß Weiterbildungen hiervon ist ein Einrastmechanismus vorgesehen zum lösbaren Arretieren des ersten oder zweiten Hebels oder des zweiten Hebelelements an dem dritten Hebel, wenn sich die Lamellen des ersten Lamellenpakets und die Lamellen des mindestens einen zweiten Lamellenpakets in ihrer dritten Stellung befinden.

Vorzugsweise weist der Einrastmechanismus ein insbesondere dem ersten, zweiten oder dritten Hebel oder dem zweiten Hebelelement zugeordnetes federndes Druckstück auf, welches ausgebildet ist, in eine Vertiefung insbesondere des ersten, zweiten oder dritten Hebels oder des zweiten Hebelelements einzurasten, wenn sich die Lamellen des ersten Lamellenpakets und die Lamellen des mindestens einen zweiten Lamellenpakets in ihrer dritten Stellung befinden.

Zusätzlich hierzu ist es denkbar, dass der dritte Hebel eine Führung oder Laufbahn aufweist, auf welcher sich das federnde Druckstück des zweiten Hebels bewegt, wenn der zweite Hebel relativ zu dem dritten Hebel verschwenkt wird. Unabhängig von der jeweiligen Ausführungsvarianten der Kinematik des erfindungsgemäßen Luftausströmers ist gemäß Realisierungen vorgesehen, dass die Kinematik des Luftausströmers ein mit dem Bedienelement des Luftausströmers einerseits und dem zweiten Hebel des Hebelmechanismus andererseits wirkverbundenes Antriebselement aufweist, welches ausgebildet ist, bei Betätigung des Bedienelements ein entsprechendes Drehmoment auf den zweiten Hebel des Hebelmechanismus zu übertragen.

Gemäß einem weiteren Aspekt der vorliegenden Erfindung, welcher mit den zuvor beschriebenen Ausführungsformen des erfindungsgemäßen Luftausströmers kombinierbar ist, wird ein Luftausströmer für ein Fahrzeug angegeben, wobei die Kinematik derart ausgebildet ist, dass:
- in einer ersten Stellung des Bedienelements die Lamellen des ersten Lamellenpakets und die Lamellen des mindestens einen zweiten Lamellenpakets mit Bezug zur Hauptströmrichtung des Luftausströmers derart angeordnet sind, dass sich die Lamellen in ihrer Neutralstellung befinden und sich der Luftausströmer in seiner Geradeaus-Stellung befindet;
- in einer zweiten Stellung des Bedienelements die Lamellen des ersten Lamellenpakets und die Lamellen des mindestens einen zweiten Lamellenpakets mit Bezug zur Hauptströmrichtung des Luftausströmers jeweils in die erste Drehrichtung derart verschwenkt vorliegen, dass von den Lamellen eine Luftablenkung in die zweite Richtung bewirkt wird;
- optional in einer dritten Stellung des Bedienelements die Lamellen des ersten Lamellenpakets mit Bezug zur Hauptströmrichtung des Luftausströmers in die zweite Drehrichtung derart verschwenkt vorliegen, dass von den Lamellen des ersten Lamellenpakets eine Luftablenkung in die zur zweiten Richtung entgegengesetzte Richtung bewirkt wird, und die Lamellen des mindestens einen zweiten Lamellenpakets mit Bezug zur Hauptströmrichtung des Luftausströmers in die erste Drehrichtung derart verschwenkt vorliegen, dass von den Lamellen des mindestens einen zweiten Lamellenpakets eine Luftablenkung in die zweite Richtung bewirkt wird;
- in einer vierten Stellung des Bedienelements die Lamellen des ersten Lamellenpakets und die Lamellen des mindestens einen zweiten Lamellenpakets mit Bezug zur Hauptströmrichtung des Luftausströmers jeweils in die zur ersten Drehrichtung entgegengesetzte zweite Drehrichtung derart verschwenkt vorliegen, dass von den Lamellen eine Luftablenkung in die zur zweiten Richtung entgegengesetzte Richtung bewirkt wird; und
- optional in einer fünften Stellung des Bedienelements die Lamellen des ersten Lamellenpakets und die Lamellen des mindestens einen zweiten Lamellenpakets mit Bezug zur Hauptströmrichtung des Luftausströmers insbesondere jeweils in der zweiten Drehrichtung derart verschwenkt vorliegen, dass mit den Lamellen der Luftkanal des Gehäuses zumindest im Wesentlichen blockiert wird.

In diesem Zusammenhang ist es insbesondere denkbar, dass in der ersten Stellung des Bedienelements die Lamellen des ersten Lamellenpakets und die Lamellen des mindestens einen zweiten Lamellenpakets - in Hauptströmrichtung gesehen - konvergierend zueinander ausgerichtet sind.

Alternativ oder zusätzlich hierzu ist es denkbar, dass in der zweiten Stellung des Bedienelements die Lamellen des ersten Lamellenpakets und die Lamellen des mindestens einen zweiten Lamellenpakets - in Hauptströmrichtung gesehen - konvergierend zueinander ausgerichtet sind.

Alternativ oder zusätzlich hierzu ist es denkbar, dass in der optionalen dritten Stellung des Bedienelements die Lamellen des ersten Lamellenpakets und die Lamellen des mindestens einen zweiten Lamellenpakets - in Hauptströmrichtung gesehen - divergierend zueinander ausgerichtet sind.

Alternativ oder zusätzlich hierzu ist es denkbar, dass in der vierten Stellung des Bedienelements die Lamellen des ersten Lamellenpakets und die Lamellen des mindestens einen zweiten Lamellenpakets - in Hauptströmrichtung gesehen - konvergierend zueinander ausgerichtet sind.

Indem die Lamellen des ersten Lamellenpakets und die Lamellen des mindestens einen zweiten Lamellenpakets konvergierend zueinander ausgerichtet sind, wird eine Düse zwischen den Lamellen gebildet und der dadurch strömende Luftstrom kann entsprechend fokussiert werden.

Nachfolgend werden unter Bezugnahme auf die beiliegenden Zeichnungen exemplarische Ausführungsformen des erfindungsgemäßen Luftausströmers näher beschrieben.

Es zeigen:
- FIG. 1: schematisch und in einer teilgeschnittenen Draufsicht eine erste exemplarische Ausführungsform des erfindungsgemäßen Luftausströmers, wobei die Lamellen des ersten und zweiten Lamellenpakets jeweils in ihrer ersten Stellung (Neutralstellung) vorliegen;
- FIG. 2: schematisch und in einer teilgeschnittenen Draufsicht die exemplarische Ausführungsform des erfindungsgemäßen Luftausströmers gemäß FIG. 1, wobei die Lamellen des ersten und zweiten Lamellenpakets in der zweiten Stellung vorliegen;
- FIG. 3: schematisch und in einer teilgeschnittenen Draufsicht die exemplarische Ausführungsform des erfindungsgemäßen Luftausströmers gemäß FIG. 1, wobei die Lamellen des ersten und zweiten Lamellenpakets in ihrer dritten Stellung vorliegen;
- FIG. 4: schematisch und in einer teilgeschnittenen Draufsicht die exemplarische Ausführungsform des erfindungsgemäßen Luftausströmers gemäß FIG. 1, wobei die Lamellen des ersten und zweiten Lamellenpakets in der vierten Stellung vorliegen;
- FIG. 5: schematisch und in einer teilgeschnittenen Draufsicht die exemplarische Ausführungsform des erfindungsgemäßen Luftausströmers gemäß FIG. 1, wobei die Lamellen des ersten und zweiten Lamellenpakets in der fünften Stellung vorliegen;
- FIG. 6: schematisch und in einer isometrischen Ansicht Komponenten des Übertragungsmechanismus der Kinematik der exemplarischen Ausführungsform des erfindungsgemäßen Luftausströmers gemäß FIG. 1;
- FIG. 7: schematisch und in einer isometrischen Ansicht Einzelheiten des Übertragungsmechanismus der Kinematik der exemplarischen Ausführungsform des erfindungsgemäßen Luftausströmers gemäß FIG. 1;
- FIG. 8: schematisch und in einer isometrischen Ansicht die Kinematik der exemplarischen Ausführungsform des erfindungsgemäßen Luftausströmers gemäß FIG. 1;
- FIG. 9: schematisch und in einer teilgeschnittenen Draufsicht eine zweite exemplarische Ausführungsform des erfindungsgemäßen Luftausströmers, wobei die Lamellen des ersten und zweiten Lamellenpakets in der ersten Stellung (Neutralstellung) vorliegen;
- FIG. 10: schematisch und in einer teilgeschnittenen Draufsicht die exemplarische Ausführungsform des erfindungsgemäßen Luftausströmers gemäß FIG. 9, wobei die Lamellen des ersten und zweiten Lamellenpakets in der zweiten Stellung vorliegen;
- FIG. 11: schematisch und in einer teilgeschnittenen Draufsicht die exemplarische Ausführungsform des erfindungsgemäßen Luftausströmers gemäß FIG. 9, wobei die Lamellen des ersten und zweiten Lamellenpakets in der dritten Stellung vorliegen;
- FIG. 12: schematisch und in einer teilgeschnittenen Draufsicht die exemplarische Ausführungsform des erfindungsgemäßen Luftausströmers gemäß FIG. 9, wobei die Lamellen des ersten und zweiten Lamellenpakets in der vierten Stellung vorliegen;
- FIG. 13: schematisch und in einer teilgeschnittenen Draufsicht die exemplarische Ausführungsform des erfindungsgemäßen Luftausströmers gemäß FIG. 9, wobei die Lamellen des ersten und zweiten Lamellenpakets in der fünften Stellung vorliegen;
- FIG. 14: schematisch und in einer isometrischen Ansicht Komponenten des Übertragungsmechanismus der Kinematik der exemplarischen Ausführungsform des erfindungsgemäßen Luftausströmers gemäß FIG. 9;
- FIG. 15: schematisch eine weitere exemplarische Ausführungsform des erfindungsgemäßen Luftausströmers, wobei die Lamellen des ersten und zweiten Lamellenpakets in ihrer Neutralstellung vorliegen;
- FIG. 16: schematisch die exemplarische Ausführungsform des erfindungsgemäßen Luftausströmers gemäß FIG. 15, wobei die Lamellen des ersten und zweiten Lamellenpakets in ihrer zweiten Stellung vorliegen;
- FIG. 17: schematisch die exemplarische Ausführungsform des erfindungsgemäßen Luftausströmers gemäß FIG. 15, wobei die Lamellen des ersten und zweiten Lamellenpakets in ihrer vierten Stellung vorliegen; und
- FIG. 18: schematisch die exemplarische Ausführungsform des erfindungsgemäßen Luftausströmers gemäß FIG. 15, wobei die Lamellen des ersten und zweiten Lamellenpakets in ihrer fünften Stellung vorliegen.

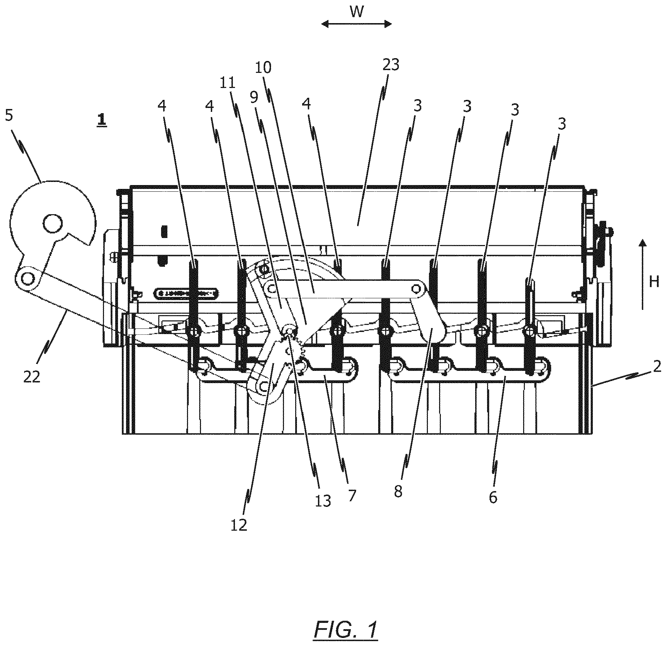

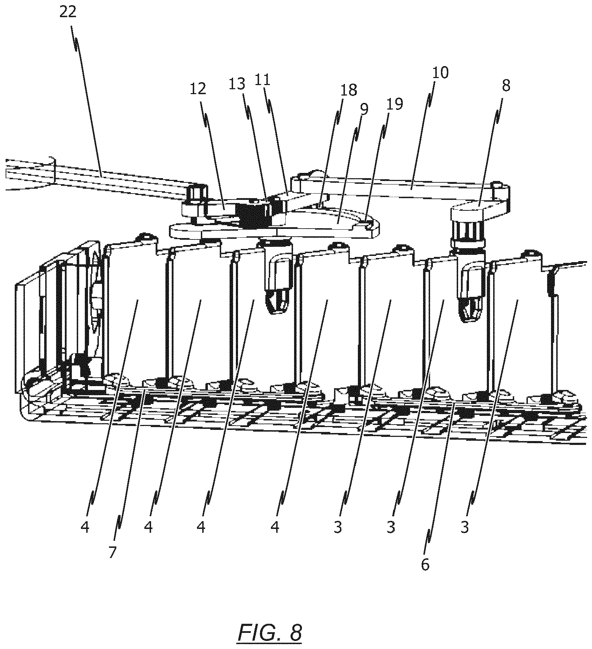

Nachfolgend wird zunächst unter Bezugnahme auf die Darstellungen in FIG. 1 bis FIG. 8 eine erste exemplarische Ausführungsform des erfindungsgemäßen Luftausströmers 1 näher beschrieben.

Der Luftausströmer 1 weist ein Gehäuse 2 mit einem einen Lufteintrittsbereich des Gehäuses 2 mit einem gegenüberliegenden Luftaustrittsbereich des Gehäuses 2 verbindenden und sich in einer Hauptströmrichtung H des Gehäuses 2 erstreckenden Luftkanal auf.

Des Weiteren ist in dem Luftausströmer 1 eine Lamellenanordnung zumindest bereichsweise in dem Luftkanal des Gehäuses 2 aufgenommen.

Die Lamellenanordnung ist aufgeteilt in ein erstes Lamellenpaket mit ersten Lamellen 3 und in ein zweites Lamellenpaket mit zweiten Lamellen 4. Dabei ist vorgesehen, dass jede einzelne Lamelle 3, 4 des ersten und zweiten Lamellenpakets um eine sich in eine erste Richtung (hier: vertikale Richtung) erstreckende Drehachse relativ zu dem Gehäuse 2 verschwenkbar ist.

In FIG. 1 ist die exemplarische Ausführungsform des erfindungsgemäßen Luftausströmers 1 in einem Zustand gezeigt, in welchem die Lamellen 3, 4 des ersten und zweiten Lamellenpakets in einer ersten Stellung vorliegen. Die erste Stellung entspricht einer Neutralstellung, in welcher die Lamellen 3, 4 des ersten und zweiten Lamellenpakets in Hauptströmrichtung H des Luftausströmers 1 derart ausgerichtet sind, dass insgesamt durch das Zusammenwirken der beiden Lamellenpakete von den Lamellen 3, 4 keine oder zumindest im Wesentlichen keine Luftablenkung in eine zweite Richtung W (hier: horizontale Richtung) bewirkt wird.

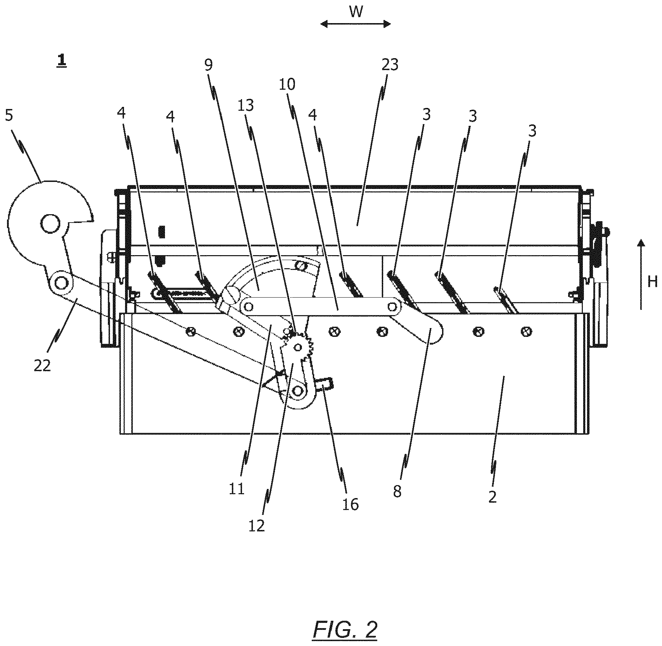

In FIG. 2 hingegen ist die exemplarische Ausführungsform des erfindungsgemä-ßen Luftausströmers 1 in einem Zustand gezeigt, in welchem die Lamellen 3, 4 des ersten und zweiten Lamellenpakets in einer ersten Drehrichtung (hier: entgegen des Uhrzeigersinns) aus ihrer Neutralstellung verschwenkt vorliegen und derart schräg zur Hauptströmrichtung H des Luftausströmers 1 ausgerichtet sind, dass von den Lamellen 3, 4 eine Luftablenkung in horizontaler Richtung W bewirkt wird.

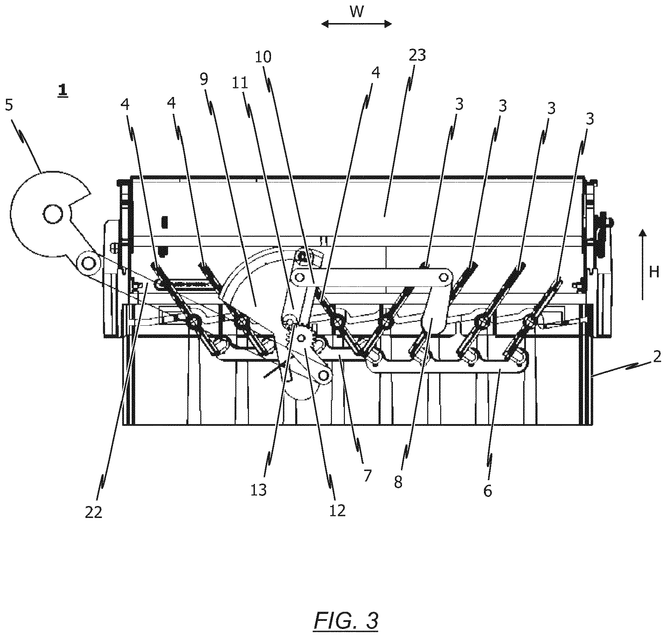

In FIG. 3 ist die exemplarische Ausführungsform des erfindungsgemäßen Luftausströmers 1 in einem Zustand gezeigt, bei welchem die Lamellen 3, 4 des ersten und zweiten Lamellenpakets in einer dritten Stellung verschwenkt sind, in welcher die ersten Lamellen 3 des ersten Lamellenpakets in der ersten Drehrichtung aus ihrer Neutralstellung verschwenkt vorliegen und derart schräg zur Hauptströmrichtung H des Luftausströmers 1 ausgerichtet sind, dass von den ersten Lamellen 3 eine Luftablenkung in eine (zum Beispiel zur ersten vertikalen Richtung senkrechte) zweite Richtung W bewirkt wird.

Andererseits sind in FIG. 3 die zweiten Lamellen 4 des zweiten Lamellenpakets in einer zweiten Drehrichtung (Drehrichtung im Uhrzeigersinn) aus ihrer Neutralstellung verschwenkt und derart schräg zur Hauptströmrichtung H des Luftausströmers 1 ausgerichtet, dass von den zweiten Lamellen 4 eine Luftablenkung in eine zur zweiten Richtung W entgegengesetzte Richtung bewirkt wird.

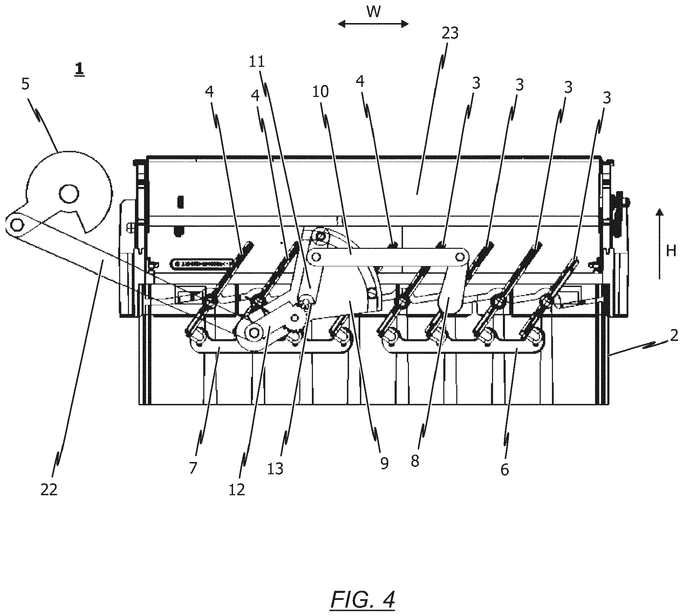

In FIG. 4 ist die erste exemplarische Ausführungsform des erfindungsgemäßen Luftausströmers 1 in einem Zustand gezeigt, in welchem die Lamellen 3, 4 des ersten und zweiten Lamellenpakets gemeinsam von der ersten Stellung (Neutralstellung) gemäß FIG. 1 in eine vierte Stellung verschwenkt sind, in welcher die Lamellen 3, 4 in der zweiten Drehrichtung aus ihrer Neutralstellung verschwenkt vorliegen und derart schräg zur Hauptströmrichtung H des Luftausströmers 1 ausgerichtet sind, dass von den Lamellen 3, 4 eine Luftablenkung in die zur zweiten Richtung W entgegengesetzte Richtung bewirkt wird.

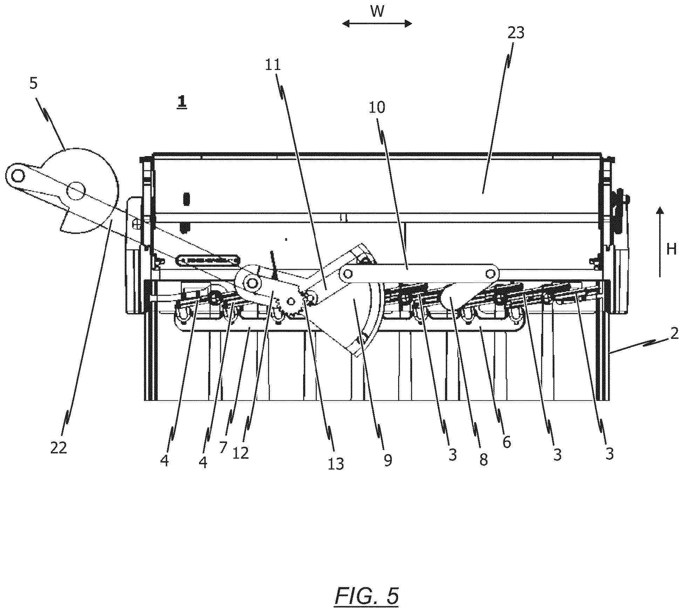

Schließlich ist in FIG. 5 die exemplarische Ausführungsform des erfindungsgemä-ßen Luftausströmers 1 in einem Zustand gezeigt, in welchem die Lamellen 3, 4 des ersten und zweiten Lamellenpakets gemeinsam relativ zu dem Gehäuse 2 des Luftausströmers 1 in eine fünfte Stellung verschwenkt sind, in welcher die Lamellen 3, 4 in der zweiten Drehrichtung aus ihrer Neutralstellung derart verschwenkt vorliegen, dass mit den Lamellen 3, 4 der Luftkanal des Gehäuses 2 zumindest im Wesentlichen blockiert wird.

Wie in den Zeichnungen (FIG. 1 bis FIG. 5) angedeutet, weist die exemplarische Ausführungsform des erfindungsgemäßen Luftausströmers 1 ein insbesondere manuell betätigbares Bedienelement 5 auf, welches über eine Kinematik mit den ersten Lamellen 3 des ersten Lamellenpakets und den zweiten Lamellen 4 des zweiten Lamellenpakets wirkverbunden ist, um bedarfsweise die Lamellenanordnung des Luftausströmers 1 geeignet zu manipulieren.

Hierbei liegt in FIG. 1 das Bedienelement 5 in einer ersten Stellung vor, während in FIG. 2 das Bedienelement 5 in einer zweiten Stellung vorliegt und sich die Lamellen 3, 4 des ersten und zweiten Lamellenpakets jeweils in ihrer zweiten Stellung befinden.

In FIG. 3 liegt das Bedienelement 5 in einer dritten Stellung vor, währen die Lamellen 3, 4 des ersten und zweiten Lamellenpakets jeweils in ihrer dritten Stellung vorliegen.

In FIG. 4 befindet sich das Bedienelement 5 in seiner vierten Stellung und die Lamellen 3, 4 des ersten und zweiten Lamellenpakets liegen jeweils in ihrer vierten Stellung vor, während in FIG. 5 das Bedienelement 5 in einer fünften Stellung vorliegt während die Lamellen 3, 4 des ersten und zweiten Lamellenpakets jeweils sich in ihrer fünften Stellung befinden.

Dabei ist insbesondere vorgesehen, dass die vierte Stellung des Bedienelements 5 zwischen der ersten und fünften Stellung des Bedienelements 5 liegt, und die zweite Stellung des Bedienelements 5 zwischen der ersten und dritten Stellung des Bedienelements 5 liegt.

Mit anderen Worten, durch Bewegung des Bedienelements 5 beispielsweise in einer Ebene (z.B. horizontal nach links oder rechts) wird nicht nur die Luftstromrichtung nach links oder rechts verstellt, sondern es wird auch der aus dem Luftaustrittsbereich des Gehäuses 2 des Luftausströmers 1 strömende Luftstrom in den Endstellungen des Bedienelements 5 bedarfsweise auf "diffus" gestellt bzw. vollständig blockiert.

In diesem Zusammenhang ist es denkbar, dass der Luftausströmer 1 ein weiteres Lamellenpaket 23 aufweist, welches um 90° relativ zu dem ersten und zweiten Lamellenpaket angeordnet ist und zur vertikalen Luftablenkung dient. Dieses weitere Lamellenpaket 23 kann ebenfalls über das Bedienelement 5 manipuliert werden, beispielsweise indem das Bedienelement 5 vertikal bewegt wird.

Insbesondere verfügt somit der erfindungsgemäße Luftausströmer 1 über Verstellmöglichkeiten der Luftrichtung "Gerade"-"Auf"-"Ab"-"Links"-"Rechts". Das weitere Lamellenpaket 23 weist dazu Horizontallamellen auf, welche die Luftrichtungsverstellung "Auf" und "Ab" realisieren. Allerdings liegt der Schwerpunkt dieser Beschreibung um die (hinteren) Vertikal-Lamellen für die Ablenkung "Links" und "Rechts".

Indem das Bedienelement 5 und die damit wirkverbundenen Lamellen 3, 4 des ersten und zweiten Lamellenpakets über die Stellung "Rechts", d.h. über die vierte Stellung, hinaus weiterbewegt werden, werden die Lamellen 3, 4 in ihren fünften Zustand bzw. in ihre fünfte Stellung überführt, in welcher die Lamellen 3, 4 gegen das Gehäuse 2 des Luftausströmers 1 und untereinander den Luftkanal abdichten.

Der erfindungsgemäße Luftausströmer 1 zeichnet sich insbesondere dadurch aus, dass bei Betätigung des Bedienelements 5 über die Stellung "Links" (zweite Stellung gemäß FIG. 2) hinaus der Luftstrom aufgespreizt wird, und zwar indem ein Teil der hinteren Lamellen 3, 4 nach links und ein anderer Teil nach rechts steht.

Das Bedienelement 5 kann ein auf einer Frontlamelle laufender Knopf sein, ein seitlich der Ausströmeröffnung liegendes Element zur kombinierten Bedienung von Auf-Ab und Rechts-Links oder - wie in der vereinfachten Darstellung in den Zeichnungen - ein Bedienrad (Thumbwheel) sein, was nur die hinteren Lamellen, d.h. die Lamellen 3, 4 des ersten und zweiten Lamellenpakets, bedient.

Nachfolgend wird die Kinematik näher beschrieben, welche zum bedarfsweisen Manipulieren der Lamellenanordnung des Luftausströmers 1 gemäß der ersten exemplarischen Ausführungsform zum Einsatz kommt.

Wie es den Darstellungen in FIG. 1 bis FIG. 5 entnommen werden kann, weist die Kinematik des Luftausströmers 1 eine erste Koppelstange 6 auf, die den ersten Lamellen 3 des ersten Lamellenpakets zugeordnet ist.

Mit der ersten Koppelstange 6 sind die ersten Lamellen 3 des ersten Lamellenpakets derart wirkverbunden, dass beim Betätigen der ersten Koppelstange 6 und insbesondere beim Bewegen der ersten Koppelstange 6 in die zweite Richtung W relativ zu dem Gehäuse 2 des Luftausströmers 1 die ersten Lamellen 3 gemeinsam relativ zu dem Gehäuse 2 verschwenkt werden.

Die Kinematik weist ferner eine von der ersten Koppelstange 6 separat ausgeführte und den zweiten Lamellen 4 des zweiten Lamellenpakets zugeordnete zweite Koppelstange 7 auf, mit welcher die zweiten Lamellen 4 derart wirkverbunden sind, dass beim Betätigen der zweiten Koppelstange 7 und insbesondere beim Bewegen der zweiten Koppelstange 7 in der zweiten Richtung W relativ zu dem Gehäuse 2 des Luftausströmers 1 die zweiten Lamellen 4 gemeinsam relativ zu dem Gehäuse 2 verschwenkt werden.

Die Kinematik des Luftausströmers 1 weist einen Übertragungsmechanismus auf, welcher ausgebildet ist, eine Bewegung der ersten Lamellen 3 des ersten Lamellenpakets auf die zweiten Lamellen 4 zu übertragen, wobei eine die Abhängigkeit der Bewegung der zweiten Lamelle 4 von der Bewegung der ersten Lamelle 3 beschreibende Übertragungsfunktion des Übertragungsmechanismus eine in Beziehung zu einer Stellung des Bedienelements 5 stehende Übertragungsfunktion ist.

Insbesondere ist der Übertragungsmechanismus ausgebildet, eine Bewegung der ersten Koppelstange 6 auf die zweite Koppelstange 7 zu übertragen, wobei eine die Abhängigkeit der Bewegung der zweiten Koppelstange 7 von der Bewegung der ersten Koppelstange 6 beschreibende Übertragungsfunktion des Übertragungsmechanismus eine in Beziehung zu der Stellung des Bedienelements 5 stehende Übertragungsfunktion ist.

Wie in FIG. 2 und FIG. 3 dargestellt, ist der Übertragungsmechanismus derart ausgebildet, dass beim Überführen des Bedienelements 5 von seiner zweiten Stellung in seine dritte Stellung und umgekehrt die mindestens eine zweite Lamelle 4 des mindestens einen zweiten Lamellenpakets in ihrer insbesondere maximal ausgeschwenkten zweiten Stellung verbleibt und die mindestens eine erste Lamelle 3 des ersten Lamellenpakets von ihrer insbesondere maximal ausgeschwenkten zweiten Stellung in ihre dritte Stellung verschwenkt wird.

Wie in FIG. 1 bis FIG. 5 dargestellt, ist der Übertragungsmechanismus ferner derart ausgebildet, dass beim Überführen des Bedienelements 5 von seiner ersten Stellung in seine zweite Stellung, von seiner ersten Stellung in seine vierte Stellung und/oder von seiner vierten Stellung in seine fünfte Stellung und jeweils umgekehrt eine Drehbewegung der ersten Lamellen 3 des ersten Lamellenpakets so auf die zweiten Lamellen 4 übertragen wird, dass sich die zweiten Lamellen 4 in der gleichen Drehrichtung wie die ersten Lamellen 3 bewegen.

Zur Realisierung des Übertragungsmechanismus weist dieser ein erstes Hebelelement 8 auf, welches an einer der ersten Lamellen 3 des ersten Lamellenpakets befestigt oder integral ausgeführt ist, und zwar vorzugsweise im Bereich der Drehachse der entsprechenden ersten Lamelle 3.

Der Übertragungsmechanismus weist ferner ein zweites Hebelelement 9 auf, welches an einer der zweiten Lamellen 4 des zweiten Lamellenpakets befestigt oder integral ausgeführt ist, und zwar vorzugsweise im Bereich der Drehachse der entsprechenden zweiten Lamelle 4.

Ferner kommt ein Kopplungsmechanismus zum Einsatz, über den das erste Hebelelement mit dem zweiten Hebelelement 9 insbesondere in Abhängigkeit von einer Stellung des Bedienelements 5 lösbar gekoppelt ist.

Der Kopplungsmechanismus weist insbesondere eine Kopplungsstange 10 auf, wobei das erste Hebelelement 8 um eine sich in die erste Richtung erstreckende Drehachse drehbar mit einem ersten Endbereich der Kopplungsstange 10 verbunden ist.

Der Kopplungsmechanismus weist ferner einen Hebelmechanismus mit einem um eine sich in die erste Richtung erstreckende erste Schwenkachse drehbar gelagerten ersten Hebel 11 und einem um eine sich in die erste Richtung erstreckende zweite Schwenkachse drehbar gelagerten zweiten Hebel 12 auf.

Der erste Hebel 11 ist über eine Zahnpaarung (erster Getriebemechanismus 13) mit dem zweiten Hebel 12 derart wirkverbunden, dass eine Drehung des zweiten Hebels 12 um die zweite Schwenkachse auf den ersten Hebel 11 übertragen wird, so dass dieser um die erste Schwenkachse verdreht wird. Dabei ist der erste Hebel 11 um eine sich in die erste Richtung erstreckende Drehachse drehbar mit einem zweiten Endbereich der Kopplungsstange 10 wirkverbunden.

Insbesondere ist in diesem Zusammenhang vorgesehen, dass die erste Schwenkachse, um welche der erste Hebel 11 des Hebelmechanismus drehbar gelagert ist, im Bereich der Drehachse der entsprechenden zweiten Lamelle 4 des zweiten Lamellenpakets, an welchem das zweite Hebelelement 9 befestigt oder integral ausgeführt ist, vorgesehen ist. Dabei ist die erste Schwenkachse, um welche der erste Hebel 11 des Hebelmechanismus drehbar gelagert ist, vorzugsweise übereinstimmend mit der Drehachse der entsprechenden zweiten Lamelle 4 des zweiten Lamellenpakets, an welchem das zweite Hebelelement 9 befestigt oder integral ausgeführt ist, ausgeführt.

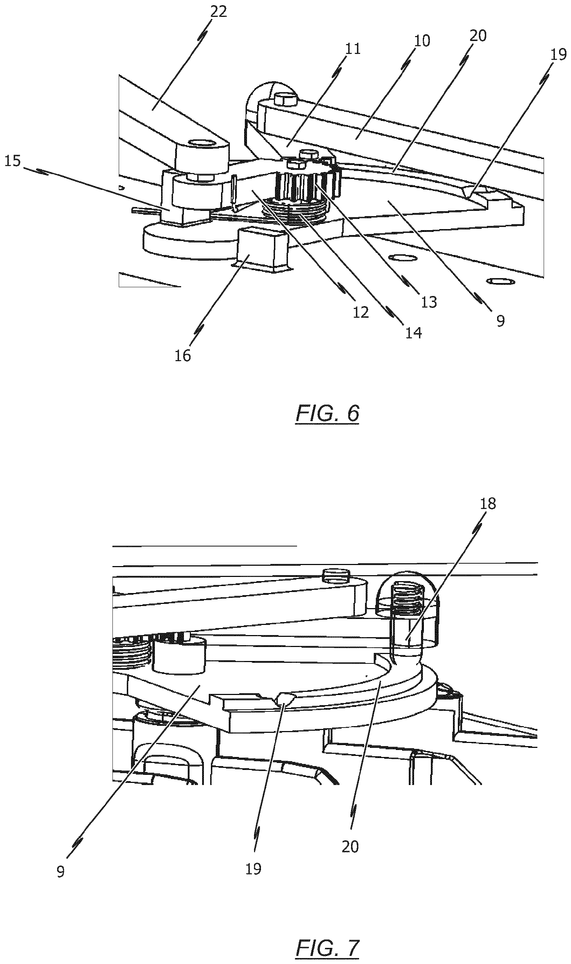

Wie es insbesondere der Darstellung in FIG. 6 entnommen werden kann, ist bei der Kinematik der ersten exemplarischen Ausführungsform des erfindungsgemä-ßen Luftausströmers 1 vorgesehen, dass der zweite Hebel 12 des Hebelmechanismus an oder auf dem zweiten Hebelelement 9 relativ zu dem zweiten Hebelelement 9 drehbar gelagert ist.

Dabei ist dem zweiten Hebel 12 ein Vorspannelement 14 in Gestalt eines Federelements zugeordnet, welches den zweiten Hebel 12 gegen einen ersten Anschlag 15 des zweiten Hebelelements 9 vorspannt, so dass bei einer Drehung des zweiten Hebels 12 das zweite Hebelelement 9 um eine sich in die erste Richtung erstreckende Drehachse mitgedreht wird.

Der Darstellung in FIG. 6 ist ferner zu entnehmen, dass dem zweiten Hebelelement 9 ein vorzugsweise mit dem Gehäuse 2 des Luftausströmers 1 verbundener zweiter Anschlag 16 zugeordnet ist, um eine Drehbewegung des zweiten Hebelelements 9 um die sich in die erste Richtung erstreckende Drehachse zu begrenzen.

Wie es insbesondere den Detailansichten in FIG. 6 bis FIG. 8 entnommen werden kann, weist der erste Hebel 11 einen Einrastmechanismus in Gestalt eines federnden Druckstücks 18 auf, welcher bzw. welches ausgebildet ist, den ersten Hebel 11 an dem zweiten Hebelelement 9 lösbar zu arretieren, wenn sich die Lamellen 3, 4 des ersten und zweiten Lamellenpakets in ihrer dritten Stellung vgl. FIG. 3 befinden. Hierzu weist das zweite Hebelelement 9 eine Vertiefung 19 auf, welche zumindest bereichsweise komplementär zu dem federnden Druckstück 18 des ersten Hebels 11 ausgeführt ist, und welche dazu dient, das federnde Druckstück 18 rastend aufzunehmen, wenn sich die Lamellen 3, 4 des ersten und zweiten Lamellenpakets in ihrer dritten Stellung befinden.

In gleicher Weise ist FIG. 6 bis FIG. 8 zu entnehmen, dass das zweite Hebelelement 9 eine Führung oder Laufbahn 20 aufweist, auf welcher sich das federnde Druckstück 18 des ersten Hebels 11 bewegt, wenn der erste Hebel 11 relativ zu dem zweiten Hebelelement 9 verschwenkt wird.

Die Kinematik des Luftausströmers 1 weist ferner ein mit dem Bedienelement 5 einerseits und dem zweiten Hebel 12 des Hebelmechanismus andererseits wirkverbundenes Antriebselement 22 Antriebsstange auf, welches ausgebildet ist, bei Betätigung des Bedienelements 5 ein entsprechendes Drehmoment auf den zweiten Hebel 12 des Hebelmechanismus zu übertragen.

Kurz zusammengefasst zeichnet sich die erste exemplarische Ausführungsform des erfindungsgemäßen Luftausströmers 1 gemäß FIG. 1 bis FIG. 8 insbesondere durch folgende Punkte aus:
Die hinteren Vertikal-Lamellen 3, 4 des Luftausströmers 1 sind in ein erstes rechtes und ein zweites linkes Lamellenpaket aufgeteilt, wobei jedes Lamellenpaket eine eigene Koppelstange 6, 7 aufweist.

An je eine der Lamellen 3, 4 eines jeden Lamellenpakets ist ein Hebelelement erstes bzw. zweites Hebelelement 8, 9 befestigt oder integriert.

In dem in FIG. 1 bis FIG. 8 gezeigten Beispiel sind auf dem zweiten linken Hebelelement 9 weitere Hebel erster und zweiter Hebel 11, 12 drehbar montiert, so dass der erste Hebel 11 bei einer Drehung um seine Lagerstelle auf dem zweiten Hebelelement 9 den zweiten Hebel 12 ebenfalls um dessen Lagerstelle auf dem zweiten Hebelelement 9 dreht. Die Drehung wird über eine Verzahnung 13 an den ersten und zweiten Hebeln 11, 12 übertragen, im gezeigten Beispiel wird günstiger Weise ein Übersetzungsverhältnis ins Schnelle 2:1 gewählt.

Im Normalbetrieb, d.h. dann, wenn die Lamellen 3, 4 des ersten und zweiten Lamellenpakets nicht in ihrer dritten Stellung vgl. FIG. 3 vorliegen, wird der zweite Hebel 12 durch eine Schenkelfeder 14 gegen den als ersten Anschlag 15 dienenden Endstop am zweiten Hebelelement 9 gedrückt, so dass der erste Hebel 11 und der zweite Hebel 12 sich nicht relativ zu dem zweiten Hebelelement 9 bewegen. Somit wird die Bewegung von dem Bedienelement 5 durch das als Antriebsstange ausgebildete Antriebselement 22 auf den zweiten Hebel 12 und somit auch auf das zweite Hebelelement 9 und den ersten Hebel 11 übertragen. Das zweite Hebelelement 9 überträgt die Bewegung direkt auf die zugehörige zweite Lamelle 4 des zweiten Lamellenpakets und diese über die zweite Koppelstange 7 auf die anderen zweiten Lamellen 4 des zweiten linken Lamellenpakets.

Der erste Hebel 11 überträgt die Bewegung über die Kopplungsstange 10 auf das erste Hebelelement 8 des ersten Lamellenpakets und dieser analog auf die zugehörige erste Lamelle 3 und das zugehörige erste Lamellenpaket.

Da sich der erste Hebel 11, das zweite Hebelelement 9 und der zweite Hebel 12 aufgrund des als Schenkelfeder ausgeführten Vorspannelements 14 sowie aufgrund des ersten Anschlags 15 im "Normalbetrieb" synchron bewegen, bewegen sich auch die ersten und zweiten Lamellen 3, 4 der beiden Lamellenpakete synchron. Dieser "Normalbetrieb" umfasst die Bereiche "Geschlossen" (vgl. FIG. 5), "Rechts" (vgl. FIG. 4), "Gerade" (vgl. FIG. 1) und "Links" (vgl. FIG. 2) und die Stellungen dazwischen.

Erst in der Stellung "Links" vgl. FIG. 2 kommt das zweite Hebelelement 9 zur Anlage an dem am Gehäuse 2 angebrachten zweiten Anschlag 16.

Erst bei weiterer Betätigung des Bedienelements 5 über diese Stellung hinaus erhöht sich die Betätigungskraft so weit, dass der zweite Hebel 12 vom ersten Anschlag 15 am zweiten Hebelelement 9 entgegen der Federkraft des insbesondere als Schenkelfeder ausgebildeten Vorspannelements 14 abgehoben werden kann.

Dann dreht sich der zweite Hebel 12 relativ zu dem am zweiten Anschlag 16 festgehaltenen zweiten Hebelelement 9 und betätigt über die Verzahnung des Getriebemechanismus 13 den ersten Hebel 11.

Durch die direkte Übersetzung der Zahnpaarung 13 dreht der erste Hebel 11 über die Kopplungsstange 10 das erste rechte Lamellenpaket in die Stellung "Rechts" und benötigt dazu relativ wenig Weg am Bedienelement 5.

Andererseits bleibt das zweite linke Lamellenpaket dabei in der Position "Links" stehen bzw. wird mit dem zweiten Hebelelement 9 am zweiten Anschlag 16 festgehalten und somit ein breiterer Luftstrom mit niedrigerer Luftgeschwindigkeit erzeugt.

Um zu verhindern, dass das als Schenkelfeder ausgeführte Vorspannelement 14 nach Loslassen des Betätigungselements 5 den ersten Hebel 11 und damit das ganze System wieder zurückstellt, ist der Einrastmechanismus vorgesehen.

Der Einrastmechanismus weist ein federndes Druckstück 18 auf, welches in der erreichten Stellung "Diffus", d.h. in der in FIG. 3 gezeigten Stellung der ersten und zweiten Lamellen 3, 4, die Position des ersten und zweiten Hebels 11, 12 relativ zu dem zweiten Hebelelement 9 einrasten lässt und festhält.

Die Position des ersten und zweiten Hebels 11, 12 relativ zu dem zweiten Hebelelement 9 wird solange festgehalten, bis eine relativ kleine Bedienkraft am Bedienelement 5 zur Kraft des als Schenkelfeder ausgeführten Vorspannelements 14 hinzukommt und beide zusammen die Haltekraft des federnden Druckstücks 18 in der Vertiefung 19 des zweiten Hebelelements 9 übersteigt und das System in die Position "Links" zurückstellt.

Das federnde Druckstück 18 kann wahlweise auch zwischen dem zweiten Hebel 12 und dem zweiten Hebelelement 9 sitzen oder umgekehrt im zweiten Hebelelement 9 platziert sein, je nachdem wie es sich aus den Platzverhältnissen am günstigsten ergibt.

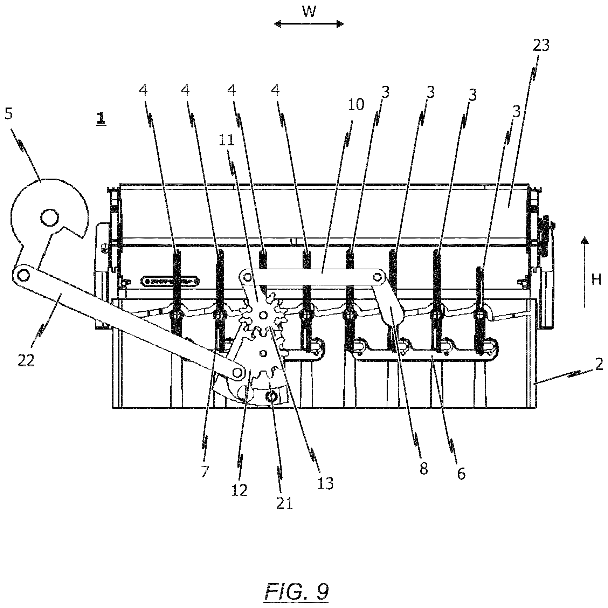

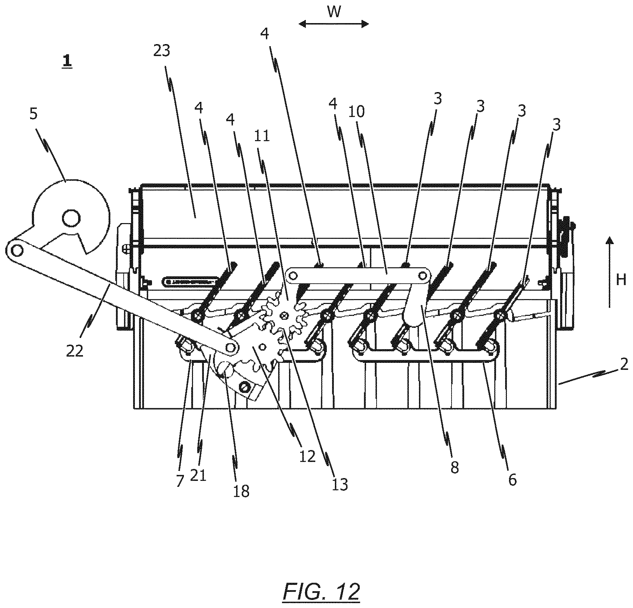

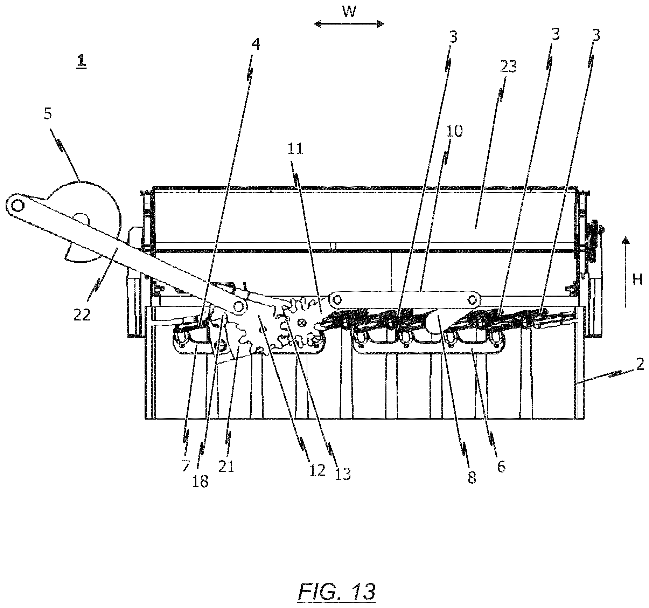

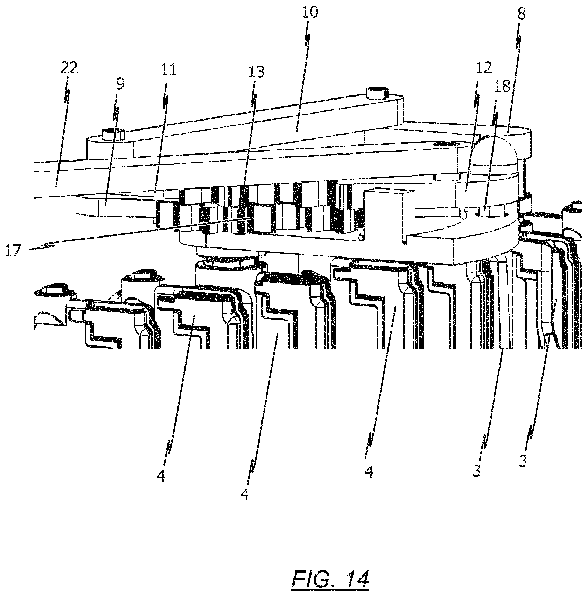

Nachfolgend wird unter Bezugnahme auf die Darstellungen in FIG. 9 bis FIG. 14 eine weitere zweite exemplarische Ausführungsform des erfindungsgemäßen Luftausströmers 1 näher beschrieben.

In funktioneller Hinsicht entspricht die zweite exemplarische Ausführungsform des erfindungsgemäßen Luftausströmers 1 der ersten Ausführungsform, die zuvor unter Bezugnahme auf FIG. 1 bis FIG. 8 beschrieben wurde. Zur Vermeidung von Wiederholungen wird von daher diesbezüglich auf die vorherigen Ausführungen verwiesen.

Die in FIG. 9 bis FIG. 14 gezeigte zweite exemplarische Ausführungsform unterscheidet sich von der ersten exemplarischen Ausführungsform durch den Aufbau der Kinematik, die zum bedarfsweisen Manipulieren der Lamellenanordnung des Luftausströmers 1 dient.

Wie auch bei der ersten Ausführungsform weist die Kinematik der zweiten Ausführungsform des erfindungsgemäßen Luftausströmers 1 eine den ersten Lamellen 3 des ersten Lamellenpakets zugeordnete erste Koppelstange 6 auf, mit welcher die ersten Lamellen 3 derart wirkverbunden sind, dass beim Betätigen der ersten Koppelstange 6 und insbesondere beim Bewegen der ersten Koppelstange 6 in der zweiten Richtung W relativ zu dem Gehäuse 2 des Luftausströmers 1 die ersten Lamellen 3 gemeinsam relativ zu dem Gehäuse 2 verschwenkt werden.

Des Weiteren weist die Kinematik eine von der ersten Koppelstange 6 separat ausgeführte und den zweiten Lamellen 4 des zweiten Lamellenpakets zugeordnete zweite Koppelstange 7 auf, mit welcher die zweiten Lamellen 4 derart wirkverbunden sind, dass beim Betätigen der zweiten Koppelstange 7 und insbesondere beim Bewegen der zweiten Koppelstange 7 in der zweiten Richtung W relativ zu dem Gehäuse 2 des Luftausströmers 1 die zweiten Lamellen 4 gemeinsam relativ zu dem Gehäuse 2 verschwenkt werden.

Auch kommt ein Übertragungsmechanismus zum Einsatz, welcher ausgebildet ist, in Abhängigkeit von einer Stellung des Bedienelements 5 eine Betätigung und insbesondere Bewegung der ersten Koppelstange 6 mit einer Betätigung und insbesondere Bewegung der zweiten Koppelstange 7 zu synchronisieren.

Der Übertragungsmechanismus weist ein erstes Hebelelement 8 auf, welches an einer der ersten Lamellen 3 des ersten Lamellenpakets befestigt oder integral ausgeführt ist, und zwar vorzugsweise im Bereich der Drehachse der entsprechenden ersten Lamelle 3. Der Übertragungsmechanismus weist ferner ein zweites Hebelelement 9 auf, welches an einer der zweiten Lamellen 4 des zweiten Lamellenpakets befestigt oder integral ausgeführt ist, und zwar vorzugsweise im Bereich der Drehachse der entsprechenden zweiten Lamelle 4.

Ferner weist der Übertragungsmechanismus einen Kopplungsmechanismus auf, über den das erste Hebelelement 8 mit dem zweiten Hebelelement 9 insbesondere in Abhängigkeit von einer Stellung des Bedienelements 5 lösbar gekoppelt ist.

Wie auch bei der ersten exemplarischen Ausführungsform des erfindungsgemäßen Luftausströmers 1 ist bei der zweiten exemplarischen Ausführungsform vorgesehen, dass der Kopplungsmechanismus eine Kopplungsstange 10 aufweist, wobei das erste Hebelelement 8 um eine sich in die erste Richtung erstreckende Drehachse drehbar mit einem ersten Endbereich der Kopplungsstange 10 verbunden ist.

Der Kopplungsmechanismus weist ferner einen Hebelmechanismus mit einem um eine sich in die erste Richtung erstreckende erste Schwenkachse drehbar gelagerten ersten Hebel 11 und einem um eine sich in die erste Richtung erstreckende zweite Schwenkachse drehbar gelagerten zweiten Hebel 12 auf. Der erste Hebel 11 ist über eine Zahnpaarung 13 mit dem zweiten Hebel 12 derart wirkverbunden, dass eine Drehung des zweiten Hebels 12 um die zweite Schwenkachse auf den ersten Hebel 11 übertragen wird, so dass dieser um die erste Schwenkachse verdreht wird.

Der erste Hebel 11 ist um eine sich in die erste Richtung erstreckende Drehachse drehbar mit einem zweiten Endbereich der Kopplungsstange 10 wirkverbunden.

Bei der Kinematik der zweiten exemplarischen Ausführungsform des erfindungsgemäßen Luftausströmers 1 weist hingegen der Hebelmechanismus einen um die erste Schwenkachse des ersten Hebels 11 drehbar gelagerten dritten Hebel 21 auf, wobei der zweite Hebel 12 über einen zweiten Getriebemechanismus 17 mit dem zweiten Hebelelement 9 derart wirkverbunden ist, dass eine Drehung des zweiten Hebels 12 um die zweite Drehachse auf das zweite Hebelelement 9 übertragen wird.

Der zweite Getriebemechanismus 17 wird vorzugsweise durch eine Zahnpaarung gebildet.

Der dritte Hebel 21 des Hebelmechanismus ist relativ zu dem zweiten Hebel 12 drehbar gelagert. Dem zweiten Hebel 12 ist ein Vorspannelement 14 in Gestalt eines Federelements zugeordnet, welches den zweiten Hebel 12 gegen einen ersten Anschlag 15 des dritten Hebels 21 vorspannt. Dabei ist dem dritten Hebel 21 ein vorzugsweise mit dem Gehäuse 2 des Luftausströmers 1 verbundener zweiter Anschlag 16 zugeordnet zum Begrenzen einer Drehbewegung des dritten Hebels 21 um die erste Schwenkachse des ersten Hebels 11.

Bei der Kinematik der zweiten exemplarischen Ausführungsform des erfindungsgemäßen Luftausströmers 1 weist der zweite Hebel 12 einen Einrastmechanismus in Gestalt eines federnden Druckstücks 18 auf, welches ausgebildet ist, den zweiten Hebel 12 an dem dritten Hebel 21 lösbar zu arretieren, wenn sich die Lamellen 3, 4 des ersten und zweiten Lamellenpakets in ihrer dritten Stellung befinden.

Hierzu weist der dritte Hebel 21 eine Vertiefung 19 zum Einrasten des federnden Druckstücks 18 des zweiten Hebels 12 auf. Ferner weist der dritte Hebel 21 eine Führung oder Laufbahn 20 auf, auf welcher sich das federnde Druckstück 18 des zweiten Hebels 12 bewegt, wenn der zweite Hebel 12 relativ zu dem dritten Hebel 21 verschwenkt wird.

Die Funktion des Druckstücks 18 ist alternativ auch gegeben, wenn das Druckstück 18 und die Rastung bzw. Vertiefung 19 in anderer Richtung oder an anderer Stelle zwischen dem dritten Hebel 21 und einem der Hebel oder Hebelelemente 9, 11 oder 12 wirken.

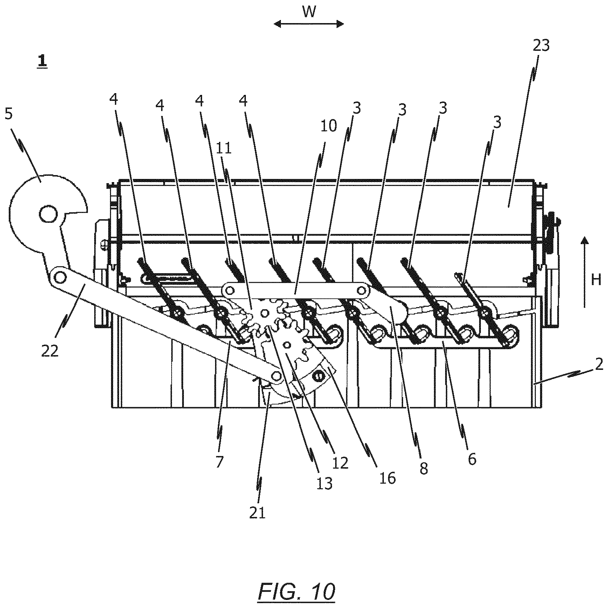

In der in FIG. 10 gezeigten zweiten Stellung der Lamellen in der Position extrem links liegt der dritte Hebel 21 an dem zweiten Anschlag 16 am Gehäuse 2 des Luftausströmers 1 an. Dabei liegt der zweite Hebel 12 wegen der Kraft des Vorspannelements 14 am ersten Anschlag 15 am dritten Hebel 21 an. Bis hierher bewegen sich der zweite und dritte Hebel 12, 21 und das zweite Hebelelement 9 nicht relativ zueinander, sondern drehen gemeinsam.

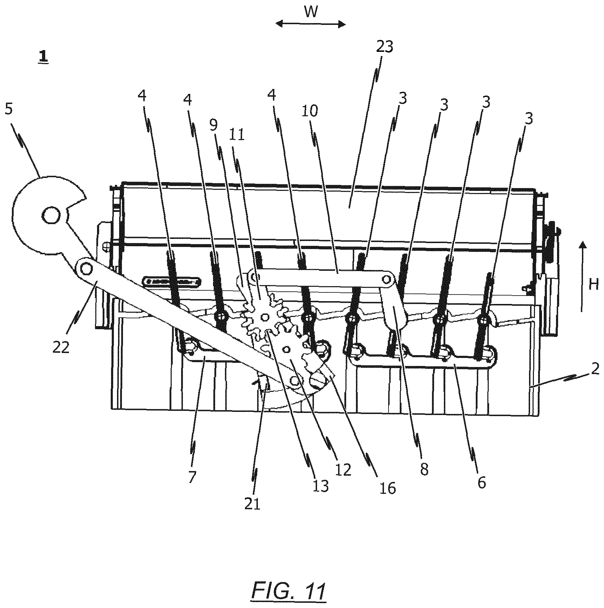

Wenn - wie in FIG. 11 gezeigt - der dritte Hebel 21 am zweiten Anschlag 16 anliegt und am Bedienelement 5 weitergedreht wird, hebt auch hier der zweite Hebel 12 gegen die Kraft des Federelements 14 vom ersten Anschlag 15 am dritten Hebel 21 ab und dreht weiter, bis das federnde Druckstück 18 des zweiten Hebels 12 in die Vertiefung 19 des dritten Hebels 21 einrastet.

Dabei wird wie gehabt über den ersten Hebel 11, die Kopplungsstange 10 und das erste Hebelelement 8 das erste rechte Lamellenpaket in die Position "Diffus" gebracht, die hier nicht die extrem rechte Position ist.

Zusätzlich wird über den zweiten Getriebemechanismus 17 vom zweiten Hebel 12 über eine andere Übersetzung als zum ersten Hebel 11 das zweite linke Lamellenpaket in die Position "Diffus" gebracht, die hier nicht die extrem linke Position ist.

Nach dem Anschlag von dem dritten Hebel 21 an dem zweiten Anschlag 16 des Gehäuses 2 und nach dem Abheben des zweiten Hebels 12 von dem ersten Anschlag 15 an dem dritten Hebel 21 bleibt der dritte Hebel 21 stehen, und es bewegen sich der erste Hebel 11, der zweite Hebel 12 und das zweite Hebelelement 9 relativ zu dem dritten Hebel 21 und relativ zueinander.

Die erste exemplarische Ausführungsform, die schematisch in FIG. 1 bis FIG. 8 gezeigt ist, zeichnet sich insbesondere dadurch aus, dass beim Überführen des Bedienelements 5 von dem in FIG. 2 gezeigten Zustand in den in FIG. 3 gezeigten Zustand die zweiten Lamellen 4 nicht verschwenkt werden, sondern in ihrer maximal ausgeschwenkten zweiten Stellung verbleiben. Nur die ersten Lamellen 3 des ersten Lamellenpakets werden entsprechend verschwenkt.

Bei der in FIG. 9 bis FIG. 14 gezeigten Ausführungsform ist dies anders, wie es ein Vergleich der FIG. 10 mit FIG. 11 ergibt.

Hier werden beim Überführen des Bedienelements 5 von der zweiten Stellung (FIG. 10) in die dritte Stellung sowohl die ersten Lamellen 3 des ersten Lamellenpakets als auch die zweiten Lamellen 4 des zweiten Lamellenpakets in der gleichen Drehrichtung verdreht, allerdings ist die Winkelgeschwindigkeit, mit welcher die ersten Lamellen 3 des ersten Lamellenpakets verschwenkt werden, größer als die Winkelgeschwindigkeit, mit welcher die zweiten Lamellen 4 des zweiten Lamellenpakets verschwenkt werden.

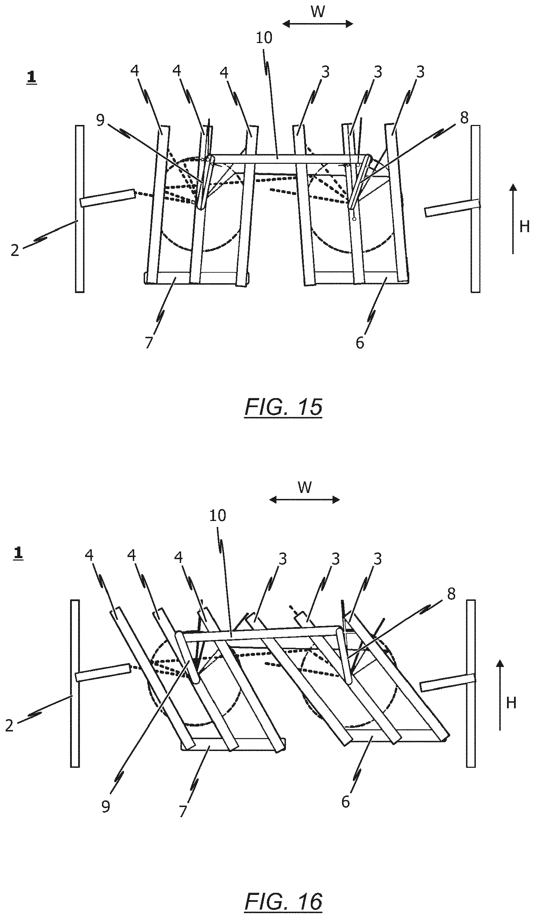

Nachfolgend wird unter Bezugnahme auf die Darstellungen in FIG. 15 bis FIG. 18 ein weiterer Aspekt der vorliegenden Erfindung näher beschrieben.

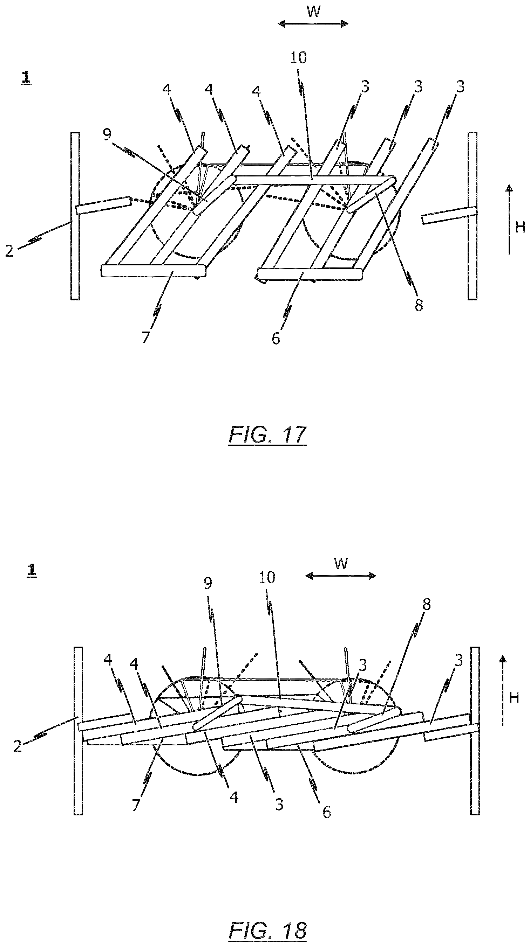

Dabei zeigt FIG. 15 schematisch eine weitere exemplarische Ausführungsform des erfindungsgemäßen Luftausströmers, wobei die Lamellen des ersten und zweiten Lamellenpakets in ihrer Neutralstellung vorliegen, während FIG. 16 schematisch die exemplarische Ausführungsform des erfindungsgemäßen Luftausströmers gemäß FIG. 15 zeigt, wobei die Lamellen des ersten und zweiten Lamellenpakets in ihrer zweiten Stellung vorliegen, FIG. 17 schematisch die exemplarische Ausführungsform des erfindungsgemäßen Luftausströmers gemäß FIG. 15 zeigt, wobei die Lamellen des ersten und zweiten Lamellenpakets in ihrer vierten Stellung vorliegen, und FIG. 18 schematisch die exemplarische Ausführungsform des erfindungsgemäßen Luftausströmers gemäß FIG. 15 zeigt, wobei die Lamellen des ersten und zweiten Lamellenpakets in ihrer fünften Stellung vorliegen.

Die in FIG. 15 bis FIG. 18 schematisch gezeigte weitere Ausführungsform des erfindungsgemäßen Luftausströmers 1 weist ein schematisch angedeutetes Gehäuse 2 mit einem einen Lufteintrittsbereich des Gehäuses 2 mit einem gegenüberliegenden Luftaustrittsbereich des Gehäuses 2 verbindenden und sich in einer Hauptströmrichtung H des Gehäuses 2 erstreckenden Luftkanal auf. Darüber hinaus ist bei dem Luftausströmer 1 vorgesehen, dass zumindest bereichsweise in dem Luftkanal des Gehäuses 2 eine Lamellenanordnung aufgenommen ist.

Die Lamellenanordnung ist in ein erstes Lamellenpaket mit ersten Lamellen 3 und in ein zweites Lamellenpaket mit zweiten Lamellen 4 aufgeteilt. Jede einzelne Lamelle 3, 4 des ersten und zweiten Lamellenpakets ist um eine sich in eine erste Richtung, insbesondere vertikale Richtung, erstreckende Drehachse relativ zu dem Gehäuse 2 verschwenkbar.

Zum bedarfsweisen Manipulieren der Lamellenanordnung weist der Luftausströmer ein in FIG. 15 bis FIG. 18 nicht explizit gezeigtes und insbesondere manuell betätigbares Bedienelement auf, welches über eine Kinematik mit den ersten Lamellen 3 des ersten Lamellenpakets und den zweiten Lamellen 4 des zweiten Lamellenpakets wirkverbunden ist.

Wie in FIG. 15 bis FIG. 18 ersichtlich, ist die Kinematik ausgebildet, dass in einer in FIG. 15 angedeuteten ersten Stellung des Bedienelements die ersten Lamellen 3 des ersten Lamellenpakets und die zweiten Lamellen 4 des zweiten Lamellenpakets mit Bezug zur Hauptströmrichtung H des Luftausströmers derart angeordnet sind, dass sich die Lamellen 3, 4 in ihrer Neutralstellung befinden und sich der Luftausströmer 1 in seiner Geradeaus-Stellung befindet.

Charakteristisch an der Neutralstellung der Lamellen 3, 4 ist insbesondere, dass dabei die ersten Lamellen 3 und die zweiten Lamellen 4 - in Hauptströmrichtung H gesehen - konvergierend zueinander ausgerichtet sind. Im Einzelnen sind dabei die ersten Lamellen 3 bezüglich der Hauptströmrichtung um etwa 5° in Richtung des zweiten Lamellenpakets geneigt. Gleiches gilt im übertragenen Sinne auch für die zweiten Lamellen 4, welche mit Bezug auf die Hauptströmrichtung H um etwa 5° in Richtung des ersten Lamellenpakets geneigt sind. Selbstverständlich sind aber auch andere Winkelbereiche denkbar.

Durch diese konvergierende Ausrichtung der ersten und zweiten Lamellen wird erreicht, dass in der Neutralstellung der Lamellen 3, 4 die Luft aus dem Luftausströmer 1 in einer fokussierenden Weise abgegeben wird.

In FIG. 16 ist der Luftausströmer 1 in einem Zustand gezeigt, in welchem das Bedienelement des Luftausströmers in einer zweiten Stellung liegt und die ersten Lamellen 3 des ersten Lamellenpakets sowie die zweiten Lamellen 4 des zweiten Lamellenpakets mit Bezug zur Hauptströmrichtung H des Luftausströmers 1 jeweils entgegen des Uhrzeigersinns derart verschwenkt vorliegen, dass von den Lamellen 3, 4 eine Luftablenkung in eine zweite Richtung W (hier: nach links) bewirkt wird.

Auch in der zweiten ausgelenkten Stellung verlaufen die ersten Lamellen des ersten Lamellenpakets jeweils parallel zueinander und die zweiten Lamellen des zweiten Lamellenpakets ebenfalls parallel zueinander. Allerdings sind die ersten Lamellen 3 des ersten Lamellenpakets mit Bezug auf die zweiten Lamellen 4 des zweiten Lamellenpakets nach wie vor leicht konvergierend ausgebildet, wobei allerdings der Konvergenzwinkel von 2 x 5° in der Neutralstellung gemäß FIG. 15 reduziert ist, insbesondere auf 2 x 4,7°.

Gleiches gilt im übertragenen Sinne auch für die in FIG. 17 gezeigte vierte Stellung der ersten Lamellen 3 des ersten Lamellenpakets und der zweiten Lamellen 4 des zweiten Lamellenpakets.

In FIG. 18 ist der Luftausströmer 1 in der fünften Stellung der Lamellen 3, 4 gezeigt. In dieser Stellung verlaufen die Lamellen 3 des ersten Lamellenpakets parallel zueinander und parallel zu den Lamellen 4 des zweiten Lamellenpakets und insgesamt schließen die Lamellen 3, 4 des ersten und zweiten Lamellenpakets den Luftkanal des Gehäuses 2.

Obgleich nicht dargestellt, ist es selbstverständlich auch denkbar, dass der Luftausströmer 1 gemäß der in FIG. 15 bis FIG. 18 gezeigten Ausführungsform in eine entsprechende dritte Stellung überführbar ist, in der mit Hilfe der Lamellen 3, 4 ein diffuser Luftstrom erzeugt wird.

Die bei dem Luftausströmer gemäß FIG. 15 bis FIG. 18 zum Einsatz kommende Kinematik weist eine den ersten Lamellen 3 des ersten Lamellenpakets zugeordnete erste Koppelstange 6 auf, mit welcher die ersten Lamellen 3 derart wirkverbunden sind, dass beim Betätigen der ersten Koppelstange 6 und insbesondere beim Bewegen der ersten Koppelstange 6 in der zweiten Richtung W relativ zu dem Gehäuse 2 des Luftausströmers 1 die ersten Lamellen 3 relativ zu dem Gehäuse 2 verschwenkt werden.

Gleichwohl weist die Kinematik des Luftausströmers 1 eine von der ersten Koppelstange 6 separat ausgeführte und den zweiten Lamellen 4 des zweiten Lamellenpakets zugeordnete zweite Koppelstange 7 auf, mit welcher die zweiten Lamellen 4 derart wirkverbunden sind, dass beim Betätigen der zweiten Koppelstange 7 und insbesondere beim Bewegen der zweiten Koppelstange 7 in der zweiten Richtung W relativ zu dem Gehäuse 2 des Luftausströmers 1 die zweiten Lamellen 4 relativ zu dem Gehäuse 2 verschwenkt werden.

Die Kinematik des Luftausströmers 1 weist ferner einen entsprechenden Übertragungsmechanismus auf, welcher ausgebildet ist, eine Bewegung der ersten Lamellen des ersten Lamellenpakets auf die zweiten Lamellen 4 des zweiten Lamellenpakets zu übertragen.

Auch hier ist bezüglich des Übertragungsmechanismus eine Übertragungsfunktion gewählt, welche eine in Beziehung zu einer Stellung des Bedienelements stehende Übertragungsfunktion ist.

Im Einzelnen ist der Übertragungsmechanismus derart ausgebildet bzw. die Übertragungsfunktion des Übertragungsmechanismus derart gewählt, dass beim Überführen des Bedienelements von seiner ersten Stellung, in welcher die Lamellen 3, 4 in ihrer Neutralstellung vorliegen (FIG. 15), in seine zweite Stellung (vgl. FIG. 16), von seiner ersten Stellung (vgl. FIG. 15) in seine vierte Stellung (vgl. FIG. 17) und von seiner vierten Stellung (vgl. FIG. 17) in seine fünfte Stellung (vgl. FIG. 18) und jeweils umgekehrt eine Drehbewegung der ersten Lamellen 3 des ersten Lamellenpakets so auf die zweiten Lamellen 4 des zweiten Lamellenpakets übertragen wird, dass sich die zweiten Lamellen 4 in der gleichen Drehrichtung wie die ersten Lamellen 3 bewegen.

Beim Überführen der Lamellen 3, 4 von der in FIG. 15 gezeigten Neutralstellung in die in FIG. 16 gezeigte zweite Stellung ist jedoch die Winkelgeschwindigkeit der zweiten Lamellen 4 größer als die der ersten Lamellen 3. Umgekehrt ist die Winkelgeschwindigkeit der ersten Lamellen 3 größer als die Winkelgeschwindigkeit der zweiten Lamellen 4, wenn die Lamellen 3, 4 von der in FIG. 15 gezeigten Neutralstellung in die in FIG. 17 gezeigte Stellung bzw. von dort in die in FIG. 18 gezeigte Stellung überführt werden.

Der Übertragungsmechanismus weist ein erstes Hebelelement 8 auf, welches an einer der ersten Lamellen 3 des ersten Lamellenpakets befestigt oder integral ausgeführt ist, und zwar vorzugsweise im Bereich der Drehachse der entsprechenden ersten Lamelle 3.

Der Übertragungsmechanismus weist ferner ein zweites Hebelelement 9 auf, welches an einer der zweiten Lamellen 4 des zweiten Lamellenpakets befestigt oder integral ausgeführt ist, und zwar erneut vorzugsweise im Bereich der Drehachse der entsprechenden zweiten Lamelle.

Darüber hinaus kommt als Kopplungsmechanismus zum Koppeln des ersten Hebelelements 8 mit dem zweiten Hebelelement 9 eine Kopplungsstange 10 zum Einsatz. Dabei ist das erste Hebelelement 8 um eine sich in die erste Richtung erstreckende Drehachse drehbar mit einem ersten Endbereich der Kopplungsstange 10 verbunden. Andererseits ist das zweite Hebelelement 9 ebenfalls um eine sich in die erste Richtung erstreckende Drehachse drehbar mit einem gegenüberliegenden zweiten Endbereich der Kopplungsstange 10 verbunden.

Durch eine geeignete Wahl des Winkels, den das erste Hebelelement 8 zu der Längserstreckungsrichtung der ersten Lamelle aufspannt, und durch eine geeignete Wahl des Winkels, welches das zweite Hebelelement 9 zu der entsprechenden Längsrichtung der zweiten Lamelle aufspannt, sowie durch die unterschiedlichen Längen der Hebelelemente 8, 9 und eine passende Länge der Kopplungsstange 10 sind der Konvergenzwinkel zwischen den ersten und zweiten Lamellen einstellbar.

### Bezugszeichenliste

- 1: Luftausströmer
- 2: Gehäuse
- 3: erste Lamellen des ersten Lamellenpakets
- 4: zweite Lamellen des zweiten Lamellenpakets
- 5: Bedienelement
- 6: erste Koppelstange
- 7: zweite Koppelstange
- 8: erstes Hebelelement
- 9: zweites Hebelelement
- 10: Kopplungsstange
- 11: erster Hebel
- 12: zweiter Hebel
- 13: erster Getriebemechanismus
- 14: Vorspannelement
- 15: erster Anschlag
- 16: zweiter Anschlag
- 17: zweiter Getriebemechanismus
- 18: federndes Druckstück
- 19: Vertiefung
- 20: Führung/Laufbahn
- 21: dritter Hebel
- 22: Antriebselement/Antriebsstange
- 23: weiteres Lamellenpaket

- H: Hauptströmrichtung
- W: zweite (horizontale) Richtung

## Patentansprüche

1. Luftausströmer (1) für ein Fahrzeug, wobei der Luftausströmer (1) Folgendes aufweist:
- ein Gehäuse (2) mit einem einen Lufteintrittsbereich des Gehäuses (2) mit einem gegenüberliegenden Luftaustrittsbereich des Gehäuses (2) verbindenden und sich in einer Hauptströmrichtung (H) des Gehäuses (2) erstreckenden Luftkanal; und
- eine zumindest bereichsweise in dem Luftkanal des Gehäuses (2) aufgenommene Lamellenanordnung,
wobei die Lamellenanordnung in ein erstes Lamellenpaket mit mehreren ersten Lamellen (3) und in mindestens ein zweites Lamellenpaket mit mehreren zweiten Lamellen (4) aufgeteilt ist, wobei jede einzelne Lamelle (3, 4) des ersten und des mindestens einen zweiten Lamellenpakets um eine sich in eine erste Richtung, insbesondere vertikale Richtung, erstreckende Drehachse relativ zu dem Gehäuse (2) verschwenkbar ist,
wobei die ersten Lamellen (3) des ersten Lamellenpakets und die zweiten Lamellen (4) des mindestens einen zweiten Lamellenpakets gemeinsam relativ zu dem Gehäuse (2) zwischen einer ersten Stellung, in welcher die Lamellen (3, 4) in einer Neutralstellung vorliegen, und einer zweiten Stellung verschwenkbar sind, in welcher die Lamellen (3, 4) in einer ersten Drehrichtung aus ihrer Neutralstellung verschwenkt vorliegen und derart schräg zur Hauptströmrichtung (H) des Luftausströmers (1) ausgerichtet sind, dass von den Lamellen (3, 4) eine Luftablenkung in eine zweite Richtung (W) bewirkt wird,
wobei die ersten Lamellen (3) des ersten Lamellenpakets oder die ersten Lamellen (3) des ersten Lamellenpakets und die zweiten Lamellen (4) des mindestens einen zweiten Lamellenpakets gemeinsam ferner relativ zu dem Gehäuse (2) in eine dritte Stellung verschwenkbar sind, in welcher die zweiten Lamellen (4) des mindestens einen zweiten Lamellenpakets in der ersten Drehrichtung aus ihrer Neutralstellung verschwenkt vorliegen und derart schräg zur Hauptströmrichtung (H) des Luftausströmers (1) ausgerichtet sind, dass von den zweiten Lamellen (4) eine Luftablenkung in die zweite Richtung (W) bewirkt wird, und in welcher die ersten Lamellen (3) des ersten Lamellenpakets in einer zweiten Drehrichtung aus ihrer Neutralstellung verschwenkt vorliegen und derart schräg zur Hauptströmrichtung (H) des Luftausströmers (1) ausgerichtet sind, dass von den ersten Lamellen (3) eine Luftablenkung in eine zur zweiten Richtung (W) entgegengesetzte Richtung bewirkt wird, wobei die zweite Drehrichtung verschieden von der ersten Drehrichtung ist,
wobei zum bedarfsweisen Manipulieren der Lamellenanordnung der Luftausströmer (1) ein insbesondere manuell betätigbares Bedienelement (5) aufweist, welches über eine Kinematik mit den ersten Lamellen (3) des ersten Lamellenpakets und den zweiten Lamellen (4) des mindestens einen zweiten Lamellenpakets wirkverbunden ist, wobei die Kinematik des Luftausströmers (1) einen Übertragungsmechanismus aufweist, welcher ausgebildet ist, eine Bewegung der ersten Lamellen (3) des ersten Lamellenpakets auf die zweiten Lamellen (4) des mindestens einen zweiten Lamellenpakets zu übertragen, wobei eine die Abhängigkeit der Bewegung der zweiten Lamellen (4) des mindestens einen zweiten Lamellenpakets von der Bewegung der ersten Lamellen (3) des ersten Lamellenpakets beschreibende Übertragungsfunktion des Übertragungsmechanismus eine in Beziehung zu einer Stellung des Bedienelements (5) stehende Übertragungsfunktion ist,
wobei die Kinematik des Luftausströmers (1) Folgendes aufweist:
- eine den ersten Lamellen (3) des ersten Lamellenpakets zugeordnete erste Koppelstange (6), mit welcher die ersten Lamellen (3) derart wirkverbunden sind, dass beim Betätigen der ersten Koppelstange (6) und insbesondere beim Bewegen der ersten Koppelstange (6) in der zweiten Richtung (W) relativ zu dem Gehäuse (2) des Luftausströmers (1) die ersten Lamellen (3) relativ zu dem Gehäuse (2) verschwenkt werden; und
- eine von der ersten Koppelstange (6) separat ausgeführte und den zweiten Lamellen (4) des mindestens einen zweiten Lamellenpakets zugeordnete zweite Koppelstange (7), mit welcher die zweiten Lamellen (4) derart wirkverbunden sind, dass beim Betätigen der zweiten Koppelstange (7) und insbesondere beim Bewegen der zweiten Koppelstange (7) in der zweiten Richtung (W) relativ zu dem Gehäuse (2) des Luftausströmers (1) die zweiten Lamellen (4) relativ zu dem Gehäuse (2) verschwenkt werden,
und wobei der Übertragungsmechanismus ausgebildet ist, eine Bewegung der ersten Koppelstange (6) auf die zweite Koppelstange (7) zu übertragen, wobei eine die Abhängigkeit der Bewegung der zweiten Koppelstange (7) von der Bewegung der ersten Koppelstange (6) beschreibende Übertragungsfunktion des Übertragungsmechanismus eine in Beziehung zu der Stellung des Bedienelements (5) stehende Übertragungsfunktion ist, **dadurch gekennzeichnet, dass** der Übertragungsmechanismus Folgendes aufweist:
- ein erstes Hebelelement (8), welches an einer der ersten Lamellen (3) des ersten Lamellenpakets befestigt oder integral ausgeführt ist, und zwar vorzugsweise im Bereich der Drehachse der entsprechenden ersten Lamelle (3);
- ein zweites Hebelelement (9), welches an einer der zweiten Lamellen (4) des mindestens einen zweiten Lamellenpakets befestigt oder integral ausgeführt ist, und zwar vorzugsweise im Bereich der Drehachse der entsprechenden zweiten Lamelle (4); und
- einen Kopplungsmechanismus, über den das erste Hebelelement (8) mit dem zweiten Hebelelement (9) gekoppelt ist, wobei eine die Abhängigkeit einer Bewegung des zweiten Hebelelements (9) von der Bewegung des ersten Hebelelements (8) beschreibende Übertragungsfunktion des Kopplungsmechanismus eine in Beziehung zu der Stellung des Bedienelements (5) stehende Übertragungsfunktion ist.

2. Luftausströmer (1) nach Anspruch 1,
wobei die ersten Lamellen (3) des ersten Lamellenpakets und die zweiten Lamellen (4) des mindestens einen zweiten Lamellenpakets gemeinsam relativ zu dem Gehäuse (2) des Luftausströmers (1) zwischen der ersten Stellung und einer vierten Stellung verschwenkbar sind, in welcher die Lamellen (3, 4) in der zweiten Drehrichtung aus ihrer Neutralstellung verschwenkt vorliegen und derart schräg zur Hauptströmrichtung (H) des Luftausströmers (1) ausgerichtet sind, dass von den Lamellen (3, 4) eine Luftablenkung in die zur zweiten Richtung (W) entgegengesetzte Richtung bewirkt wird; und/oder
wobei die ersten Lamellen (3) des ersten Lamellenpakets und die zweiten Lamellen (4) des mindestens einen zweiten Lamellenpakets gemeinsam relativ zu dem Gehäuse (2) des Luftausströmers (1) in eine fünfte Stellung verschwenkbar sind, in welcher die Lamellen (3, 4) in der zweiten Drehrichtung aus ihrer Neutralstellung derart verschwenkt vorliegen, dass mit den Lamellen (3, 4) der Luftkanal des Gehäuses (2) zumindest im Wesentlichen blockiert wird.

3. Luftausströmer (1) nach Anspruch 2,
wobei die Kinematik derart ausgebildet ist, dass:
- in einer ersten Stellung des Bedienelements (5) die ersten Lamellen (3) des ersten Lamellenpakets und die zweiten Lamellen (4) des mindestens einen zweiten Lamellenpakets jeweils in ihrer Neutralstellung vorliegen;
- in einer zweiten Stellung des Bedienelements (5) die ersten Lamellen (3) des ersten Lamellenpakets und die zweiten Lamellen (4) des mindestens einen zweiten Lamellenpakets jeweils in ihrer zweiten Stellung vorliegen;
- in einer dritten Stellung des Bedienelements (5) die ersten Lamellen (3) des ersten Lamellenpakets und die zweiten Lamellen (4) des mindestens einen zweiten Lamellenpakets jeweils in ihrer dritten Stellung vorliegen;
- in einer vierten Stellung des Bedienelements (5) die ersten Lamellen (3) des ersten Lamellenpakets und die zweiten Lamellen (4) des mindestens einen zweiten Lamellenpakets jeweils in ihrer vierten Stellung vorliegen; und
- in einer fünften Stellung des Bedienelements (5) die ersten Lamellen (3) des ersten Lamellenpakets und die zweiten Lamellen (4) des mindestens einen zweiten Lamellenpakets jeweils in ihrer fünften Stellung vorliegen,
wobei die vierte Stellung des Bedienelements (5) vorzugsweise zwischen der ersten und fünften Stellung des Bedienelements (5) liegt; und/oder
wobei die zweite Stellung des Bedienelements (5) vorzugsweise zwischen der ersten und dritten Stellung des Bedienelements (5) liegt.

4. Luftausströmer (1) nach einem der Ansprüche 1 bis 3,
wobei der Kopplungsmechanismus eine Kopplungsstange (10) aufweist, wobei das erste Hebelelement (8) um eine sich in die erste Richtung erstreckende Drehachse drehbar mit einem ersten Endbereich der Kopplungsstange (10) verbunden ist, wobei der Kopplungsmechanismus ferner einen Hebelmechanismus mit einem um eine sich in die erste Richtung erstreckende erste Schwenkachse drehbar gelagerten ersten Hebel (11) und einem um eine sich in die erste Richtung erstreckende zweite Schwenkachse drehbar gelagerten zweiten Hebel (12) aufweist, wobei der erste Hebel (11) über einen Getriebemechanismus (13) mit dem zweiten Hebel (12) derart wirkverbunden ist, dass eine Drehung des zweiten Hebels (12) um die zweite Schwenkachse auf den ersten Hebel (11) übertragen wird, so dass dieser um die erste Schwenkachse verdreht wird, wobei der erste Hebel (11) um eine sich in die erste Richtung erstreckende Drehachse drehbar mit einem zweiten Endbereich der Kopplungsstange (10) wirkverbunden ist, und wobei der Getriebemechanismus (13) vorzugsweise durch eine Zahnpaarung gebildet wird.

5. Luftausströmer (1) nach Anspruch 4,
wobei die erste Schwenkachse, um welche der erste Hebel (11) des Hebelmechanismus drehbar gelagert ist, im Bereich der Drehachse der entsprechenden zweiten Lamelle (4) des mindestens einen zweiten Lamellenpakets, an welchem das zweite Hebelelement (9) befestigt oder integral ausgeführt ist, vorgesehen ist, und wobei vorzugsweise die erste Schwenkachse, um welche der erste Hebel (11) des Hebelmechanismus drehbar gelagert ist, mit der Drehachse der entsprechenden zweiten Lamelle (4) des mindestens einen zweiten Lamellenpakets, an welchem das zweite Hebelelement (9) befestigt oder integral ausgeführt ist, übereinstimmt.

6. Luftausströmer (1) nach Anspruch 4 oder 5,
wobei der zweite Hebel (12) des Hebelmechanismus an oder auf dem zweiten Hebelelement (9) relativ zu dem zweiten Hebelelement (9) drehbar gelagert ist, wobei dem zweiten Hebel (12) ein Vorspannelement (14), insbesondere in Gestalt eines Federelements, zugeordnet ist, welches den zweiten Hebel (12) gegen einen ersten Anschlag (15) des zweiten Hebelelements (9) vorspannt, so dass bei einer Drehung des zweiten Hebels (12) das zweite Hebelelement (9) um eine sich in die erste Richtung erstreckende Drehachse mitgedreht wird, wobei dem zweiten Hebelelement (9) ein vorzugsweise mit dem Gehäuse (2) des Luftausströmers (1) verbundener zweiter Anschlag (16) zugeordnet ist zum Begrenzen einer Drehbewegung des zweiten Hebelelements (9) um die sich in die erste Richtung erstreckende Drehachse,
wobei vorzugsweise ein Einrastmechanismus vorgesehen ist zum lösbaren Arretieren des ersten oder zweiten Hebels (11, 12) an dem zweiten Hebelelement (9), wenn sich die ersten Lamellen (3) des ersten Lamellenpakets und die zweiten Lamellen (4) des mindestens einen zweiten Lamellenpakets in ihrer dritten Stellung befinden, wobei der Einrastmechanismus vorzugsweise ein insbesondere dem ersten oder zweiten Hebel (11, 12) oder dem zweiten Hebelelement (9) zugeordnetes federndes Druckstück (18) aufweist, welches ausgebildet ist, in eine Vertiefung (19) insbesondere des zweiten Hebelelements (9) oder des ersten oder zweiten Hebels (11, 12) einzurasten, wenn sich die ersten Lamellen (3) des ersten Lamellenpakets und die zweiten Lamellen (4) des mindestens einen zweiten Lamellenpakets in ihrer dritten Stellung befinden.

7. Luftausströmer (1) nach Anspruch 4 oder 5,
wobei der Hebelmechanismus einen um die erste Schwenkachse des ersten Hebels (11) drehbar gelagerten dritten Hebel (21) aufweist, wobei der zweite Hebel (12) über einen zweiten Getriebemechanismus (17) mit dem zweiten Hebelelement (9) derart wirkverbunden ist, dass eine Drehung des zweiten Hebels (12) um die zweite Drehachse auf das zweite Hebelelement (9) übertragen wird, wobei der zweite Getriebemechanismus (17) vorzugsweise durch eine Zahnpaarung gebildet wird, und wobei das Übersetzungsverhältnis des zweiten Getriebemechanismus (17) vorzugsweise verschieden von dem Übersetzungsverhältnis des Getriebemechanismus (13) ist, über den der erste Hebel (11) mit dem zweiten Hebel (12) wirkverbunden ist.

8. Luftausströmer (1) nach Anspruch 7,
wobei der dritte Hebel (21) des Hebelmechanismus relativ zu dem zweiten Hebel (12) drehbar gelagert ist, wobei dem zweiten Hebel (12) ein Vorspannelement (14), insbesondere in Gestalt eines Federelements, zugeordnet ist, welches den zweiten Hebel (12) gegen einen ersten Anschlag (15) des dritten Hebels (21) vorspannt, wobei dem dritten Hebel (21) ein vorzugsweise mit dem Gehäuse (2) des Luftausströmers (1) verbundener zweiter Anschlag (16) zugeordnet ist zum Begrenzen einer Drehbewegung des dritten Hebels (21) um die erste Schwenkachse des ersten Hebels (11),
wobei vorzugsweise ein Einrastmechanismus vorgesehen ist zum lösbaren Arretieren des ersten oder zweiten Hebels (11, 12) oder des zweiten Hebelelements (9) an dem dritten Hebel (21), wenn sich die ersten Lamellen (3) des ersten Lamellenpakets und die zweiten Lamellen (4) des mindestens einen zweiten Lamellenpakets in ihrer dritten Stellung befinden, wobei der Einrastmechanismus vorzugsweise ein insbesondere dem ersten, zweiten oder dritten Hebel (11, 12, 21) oder dem zweiten Hebelelement (9) zugeordnetes federndes Druckstück (18) aufweist, welches ausgebildet ist, in eine Vertiefung (19) insbesondere des ersten, zweiten oder dritten Hebels (11, 12, 21) oder des zweiten Hebelelements (9) einzurasten, wenn sich die ersten Lamellen (3) des ersten Lamellenpakets und die zweiten Lamellen (4) des mindestens einen zweiten Lamellenpakets in ihrer dritten Stellung befinden.

9. Luftausströmer (1) nach einem der Ansprüche 4 bis 8,
wobei die Kinematik des Luftausströmers (1) ein mit dem Bedienelement (5) einerseits und dem zweiten Hebel (12) des Hebelmechanismus andererseits wirkverbundenes Antriebselement (22) aufweist, welches ausgebildet ist, bei Betätigung des Bedienelements (5) ein entsprechendes Drehmoment auf den zweiten Hebel (12) des Hebelmechanismus zu übertragen.

10. Luftausströmer (1) nach einem der Ansprüche 1 bis 9,
wobei die Kinematik derart ausgebildet ist, dass:
- in einer ersten Stellung des Bedienelements (5) die ersten Lamellen (3) des ersten Lamellenpakets und die zweiten Lamellen (4) des mindestens einen zweiten Lamellenpakets mit Bezug zur Hauptströmrichtung (H) des Luftausströmers (1) derart angeordnet sind, dass sich die Lamellen (3, 4) in ihrer Neutralstellung befinden und sich der Luftausströmer (1) in seiner Geradeaus-Stellung befindet;
- in einer zweiten Stellung des Bedienelements (5) die ersten Lamellen (3) des ersten Lamellenpakets und die zweiten Lamellen (4) des mindestens einen zweiten Lamellenpakets mit Bezug zur Hauptströmrichtung (H) des Luftausströmers (1) jeweils in die erste Drehrichtung derart verschwenkt vorliegen, dass von den Lamellen (3, 4) eine Luftablenkung in die zweite Richtung (W) bewirkt wird;
- optional in einer dritten Stellung des Bedienelements (5) die ersten Lamellen (3) des ersten Lammellenpakets mit Bezug zur Hauptströmrichtung (H) des Luftausströmers (1) in die zweite Drehrichtung derart verschwenkt vorliegen, dass von den ersten Lamellen (3) des ersten Lammellenpakets eine Luftablenkung in die zur zweiten Richtung (W) entgegengesetzte Richtung bewirkt wird, und die zweiten Lamellen (4) des mindestens einen zweiten Lammellenpakets mit Bezug zur Hauptströmrichtung (H) des Luftausströmers (1) in die erste Drehrichtung derart verschwenkt vorliegen, dass von den zweiten Lamellen (4) des mindestens einen zweiten Lammellenpakets eine Luftablenkung in die zweite Richtung (W) bewirkt wird;
- in einer vierten Stellung des Bedienelements (5) die ersten Lamellen (3) des ersten Lamellenpakets und die zweiten Lamellen (4) des mindestens einen zweiten Lamellenpakets mit Bezug zur Hauptströmrichtung (H) des Luftausströmers (1) jeweils in die zur ersten Drehrichtung entgegengesetzte zweite Drehrichtung derart verschwenkt vorliegen, dass von den Lamellen (3, 4) eine Luftablenkung in die zur zweiten Richtung (W) entgegengesetzte Richtung bewirkt wird, und
- optional in einer fünften Stellung des Bedienelements (5) die ersten Lamellen (3) des ersten Lamellenpakets und die zweiten Lamellen (4) des mindestens einen zweiten Lamellenpakets mit Bezug zur Hauptströmrichtung (H) des Luftausströmers (1) insbesondere jeweils in der zweiten Drehrichtung derart verschwenkt vorliegen, dass mit den Lamellen (3, 4) der Luftkanal des Gehäuses (2) zumindest im Wesentlichen blockiert wird.

11. Luftausströmer (1) nach Anspruch 10,
wobei in der ersten Stellung des Bedienelements (5) die ersten Lamellen (3) des ersten Lammellenpakets und die zweiten Lamellen (4) des mindestens einen zweiten Lamellenpakets - in Hauptströmrichtung (H) gesehen - konvergierend zueinander ausgerichtet sind; und/oder
wobei in der zweiten Stellung des Bedienelements (5) die ersten Lamellen (3) des ersten Lammellenpakets und die zweiten Lamellen (4) des mindestens einen zweiten Lamellenpakets - in Hauptströmrichtung (H) gesehen - konvergierend zueinander ausgerichtet sind; und/oder
wobei in der optionalen dritten Stellung des Bedienelements (5) die ersten Lamellen (3) des ersten Lammellenpakets und die zweiten Lamellen (4) des mindestens einen zweiten Lamellenpakets - in Hauptströmrichtung (H) gesehen - divergierend zueinander ausgerichtet sind; und/oder
wobei in der vierten Stellung des Bedienelements (5) die ersten Lamellen (3) des ersten Lammellenpakets und die zweiten Lamellen (4) des mindestens einen zweiten Lamellenpakets - in Hauptströmrichtung (H) gesehen - konvergierend zueinander ausgerichtet sind.

## Claims

1. An air vent (1) for a motor vehicle, wherein the air vent (1) comprises the following:
- a housing (2) having an air channel connecting an air inlet region of the housing (2) to an opposing air outlet region of the housing (2) and extending in a main flow direction (H) of the housing (2); and
- a slat assembly received at least in regions in the air channel of the housing (2),
wherein the slat assembly is divided into a first slat package having a plurality of first slats (3) and at least a second slat package having a plurality of second slats (4), wherein each individual slat (3, 4) of the first and the at least one second slat package is pivotable relative to the housing (2) about an axis of rotation extending in a first direction, in particular a vertical direction,
wherein the first slats (3) of the first slat package and the second slats (4) of the at least one second slat package are pivotable together relative to the housing (2) between a first position in which the slats (3, 4) lie in a neutral position and a second position in which the slats (3, 4) lie pivoted in a first rotational direction from their neutral position and are oriented obliquely to the main flow direction (H) of the air vent (1) such that a deflection of air from the slats (3, 4) in a second direction (W) is effected,
wherein the first slats (3) of the first slat package or the first slats (3) of the first slat package and the second slats (4) of the at least one second slat package are further pivotable together relative to the housing (2) into a third position in which the second slats (4) of the at least one second slat package lie pivoted in the first rotational direction from their neutral position and are oriented obliquely to the main flow direction (H) of the air vent (1) such that a deflection of air from the second slats (4) in the second direction (W) is effected, and in which the first slats (3) of the first slat package lie pivoted in a second rotational direction from their neutral position and are oriented obliquely to the main flow direction (H) of the air vent (1) such that a deflection of air from the first slats (3) in a direction counter to the second direction (W) is effected, wherein the second rotational direction is different from the first rotational direction,
wherein
for the as-needed manipulation of the slat assembly, the air vent (1) has a control element (5), in particular a manually actuatable one, which is operatively connected via a kinematics to the first slats (3) of the first slat package and the second slats (4) of the at least one second slat package, wherein the kinematics of the air vent (1) has a transfer mechanism, which is configured in order to transfer a movement of the first slats (3) of the first slat package to the second slats (4) of the at least one second slat package, wherein a transfer function of the transfer mechanism describing the dependency of the movement of the second slats (4) of the at least one second slat package on the movement of the first slats (3) of the first slat package is a transfer function correlated to a position of the control element (5),
wherein the kinematics of the air vent (1) comprises the following:
- a first coupling rod (6) associated with the first slats (3) of the first slat package, with which rod the first slats (3) are operatively connected such that when the first coupling rod (6) is actuated, and in particular when the first coupling rod (6) is moved in the second direction (W) relative to the housing (2) of the air vent (1), the first slats (3) are pivoted relative to the housing (2); and
- a second coupling rod (7) configured separately from the first coupling rod (6) and associated with the second slats (4) of the at least one second slat package, with which rod the second slats (4) are operatively connected such that when the second coupling rod (7) is actuated, and in particular when the second coupling rod (7) is moved in the second direction (W) relative to the housing (2) of the air vent (1), the second slats (4) are pivoted relative to the housing (2),
and wherein
the transfer mechanism is configured in order to transfer a movement of the first coupling rod (6) to the second coupling rod (7), wherein a transfer function of the transfer mechanism describing the dependency of the movement of the second coupling rod (7) on the movement of the first coupling rod (6) is a transfer function correlated to a position of the control element (5), **characterized in that** the transfer mechanism comprises the following:
- a first lever element (8) attached to or integrally configured with one of the first slats (3) of the first slat package, preferably in the region of the axis of rotation of the corresponding first slat (3) ;
- a second lever element (9) attached or integrally configured with one of the second slats (4) of the at least one second slat package, preferably in the region of the axis of rotation of the corresponding second slat (4); and
- a coupling mechanism via which the first lever element (8) is coupled to the second lever element (9), a transfer function of the coupling mechanism describing the dependency of the movement of the second lever element (9) on the movement of the first lever element (8) is a transfer function correlated to a position of the control element (5) .

2. The air vent (1) according to claim 1,
wherein the first slats (3) of the first slat package and the second slats (4) of the at least one second slat package are pivotable together relative to the housing (2) of the air vent (1) between the first position and a fourth position in which the slats (3, 4) lie pivoted in the second rotational direction from their neutral position and are oriented obliquely to the main flow direction (H) of the air vent (1) such that a deflection of air from the slats (3, 4) in a direction counter to the second direction (W) is effected; and/or
wherein the first slats (3) of the first slat package and the second slats (4) of the at least one second slat package are pivotable together relative to the housing (2) of the air vent (1) into a fifth position in which the slats (3, 4) lie pivoted in the second rotational direction from their neutral position such that the air channel of the housing (2) is substantially blocked with the slats (3, 4).

3. The air vent (1) according to claim 2,
wherein the kinematics is configured such that:
- in a first position of the control element (5), the first slats (3) of the first slat package and the second slats (4) of the at least one second slat package are each in their neutral position;
- in a second position of the control element (5), the first slats (3) of the first slat package and the second slats (4) of the at least one second slat package are each in their second position;
- in a third position of the control element (5), the first slats (3) of the first slat package and the second slats (4) of the at least one second slat package are each in their third position;
- in a fourth position of the control element (5), the first slats (3) of the first slat package and the second slats (4) of the at least one second slat package are each in their fourth position; and
- in a fifth position of the control element (5), the first slats (3) of the first slat package and the second slats (4) of the at least one second slat package are each in their fifth position;
wherein the fourth position of the control element (5) preferably lies between the first and fifth position of the control element (5); and/or
wherein the second position of the control element (5) preferably lies between the first and third position of the control element (5).

4. The air vent (1) according to any one of claims 1 to 3,
wherein the coupling mechanism has a coupling rod (10), wherein the first lever element (8) is rotatably connected to a first end region of the coupling rod (10) about an axis of rotation extending in the first direction, wherein the coupling mechanism further has a lever mechanism with a first lever (11) rotatably mounted about a first pivot axis extending in the first direction and a second lever (12) rotatably mounted about a second pivot axis extending in the first direction, wherein the first lever (11) is operatively connected to the second lever (12) via a transmission mechanism (13) such that a rotation of the second lever (12) about the second pivot axis is transferred to the first lever (11) such that it is twisted about the first pivot axis, wherein the first lever (11) is operatively connected to a second end region of the coupling rod (10) about an axis of rotation extending in the first direction, and wherein the transmission mechanism (13) is preferably formed by a pairing of teeth.

5. The air vent (1) according to claim 4,
wherein the first pivot axis about which the first lever (11) of the lever mechanism is rotatably mounted is provided in the region of the axis of rotation of the corresponding second slat (4) of the at least one second slat package to which or with which the second lever element (9) is fixed or integrally configured, and wherein preferably the first pivot axis about which the first lever (11) of the lever mechanism is rotatably mounted conforms to the axis of rotation of the corresponding second slat (4) of the at least one second slat package to which or with which the second lever element (9) is fixed or integrally configured.

6. The air vent (1) according to claim 4 or 5,
wherein the second lever (12) of the lever mechanism is mounted to or on the second lever element (9) rotatably relative to the second lever element (9), wherein the second lever (12) is associated with a biasing element (14), in particular in the form of a spring element, which biases the second lever (12) against a first stop (15) of the second lever element (9), such that upon a rotation of the second lever (12), the second lever element (9) is rotated about an axis of rotation extending in the first direction, wherein a second stop (16) preferably connected to the housing (2) of the air vent (1) is associated with the second lever element (9) for limiting a rotational movement of the second lever element (9) about the axis of rotation extending in the first direction,
wherein a snap mechanism is preferably provided for releasably locking the first or second lever (11, 12) on the second lever element (9) when the first slats (3) of the first slat package and the second slats (4) of the at least one second slat package are in their third position, wherein the snap mechanism preferably has a spring-loaded pressure piece (18) associated with the first or second lever (11, 12), in particular, or the second lever element (9), said pressure piece being configured in order to snap into a recess (19) in particular of the second lever element (9) or the first or second lever (11, 12) when the first slats (3) of the first slat package and the second slats (4) of the at least one second slat package are in their third position.

7. The air vent (1) according to claim 4 or 5,
wherein the lever mechanism comprises a third lever (21) pivotably supported about the first pivot axis of the first lever (11), wherein the second lever (12) is operatively connected to the second lever element (9) via a second gear mechanism (17) such that a rotation of the second lever (12) about the second pivot axis is transferred to the second lever element (9),
wherein the second
gear mechanism (17) is preferably formed by a pairing of teeth, and wherein the gear ratio of the second gear mechanism (17) is preferably different from the gear ratio of the gear mechanism (13) via which the first lever (11) is operatively connected to the second lever (12).

8. The air vent (1) according to claim 7,
wherein the third lever (21) of the lever mechanism is mounted rotatably relative to the second lever (12), wherein the second lever (12) is associated with a biasing element (14), in particular in the form of a spring element, which biases the second lever (12) against a first stop (15) of the third lever (21), wherein a second stop (16) connected to the housing (2) of the air vent (1) is preferably associated with the third lever (21) for limiting a rotational movement of the third lever (21) about the first pivot axis of the first lever (11),
wherein a snap mechanism is preferably provided for releasably locking the first or second lever (11, 12) or the second lever element (9) on the third lever (21) when the first slats (3) of the first slat package and the second slats (4) of the at least one second slat package are in their third position, wherein the snap mechanism preferably has a spring-loaded pressure piece (18) associated with the first, second, or third lever (11, 12, 21), in particular, or the second lever element (9), said pressure piece being configured in order to snap into a recess (19) in particular of the first, second, or third lever (11, 12, 21) or the second lever element (9) when the first slats (3) of the first slat package and the second slats (4) of the at least one second slat package are in their third position.

9. The air vent (1) according to any of the claims 4 to 8, wherein the kinematics of the air vent (1) has a drive element (22) operatively connected to the control element (5) on the one hand and the second lever (12) of the lever mechanism on the other hand, which is configured in order to transfer a corresponding torque to the second lever (12) of the lever mechanism upon actuation of the control element (5) .

10. The air vent (1) according to any of the claims 1 to 9, wherein the kinematics is configured such that:
- in a first position of the control element (5), the first slats (3) of the first slat package and the second slats (4) of the at least one second slat package are disposed relative to the main flow direction (H) of the air vent (1) such that the slats (3, 4) are in their neutral position and the air vent (1) is in its straight-line position;
- in a second position of the control element (5), the first slats (3) of the first slat package and the second slats (4) of the at least one slat package are each pivoted relative to the main flow direction (H) of the air vent (1) in the first rotational direction such that a deflection of air from the slats (3, 4) in the second direction (W) is effected;
- optionally, in a third position of the control element (5), the first slats (3) of the first slat package lie pivoted in the second rotational direction relative to the main flow direction (H) of the air vent (1) such that a deflection of air from the first slats (3) of the first slat package in the direction counter to the second direction (W) is effected, and the second slats (4) of the at least one second slat package lie pivoted in the first rotational direction relative to the main flow direction (H) of the air vent (1) such that a deflection of air from the second slats (4) of the at least one second slat package in the second direction (W) is effected;
- in a fourth position of the control element (5), the first slats (3) of the first slat package and the second slats (4) of the at least one second slat package lie pivoted together relative to the main flow direction (H) of the air vent (1) in the second rotational direction counter to the first rotational direction such that a deflection of air from the slats (3, 4) in the direction counter to the second direction (W) is effected, and
- optionally, in a fifth position of the control element (5), the first slats (3) of the first slat package and the second slats (4) of the at least one slat package lie pivoted together relative to the main flow direction (H) of the air vent (1), in particular in the second rotational direction such that the air channel of the housing (2) is at least substantially blocked with the slats (3, 4).

11. The air vent (1) according to claim 10,
wherein, in the first position of the control element (5), the first slats (3) of the first slat package, and the second slats (4) of the at least one second slat package are aligned so as to converge with one another when viewed in the main flow direction (H); and/or wherein, in the second position of the control element (5), the first slats (3) of the first slat package and the second slats (4) of the at least one slat package are aligned so as to converge with one another when viewed in the main flow direction (H); and/or wherein, in the optional third position of the control element (5), the first slats (3) of the first slat package and the second slats (4) of the at least one second slat package are aligned so as to diverge from one another when viewed in the main flow direction (H); and/or wherein, in the fourth position of the control element (5), the first slats (3) of the first slat package and the second slats (4) of the at least one second slat package are aligned so as to converge with one another when viewed in the main flow direction (H).

## Revendications

1. Bouche d'aération (1) pour un véhicule automobile,
dans laquelle la bouche d'aération (1) comprend ce qui suit :
- un boîtier (2) ayant un canal d'air reliant une zone d'entrée d'air du boîtier (2) à une zone de sortie d'air opposée du boîtier (2) et s'étendant dans une direction d'écoulement principale (H) du boîtier (2) ; et
- un ensemble de lamelles reçu au moins dans des zones dans le canal d'air du boîtier (2),
dans laquelle l'ensemble de lamelles est divisé en un premier ensemble de lamelles ayant une pluralité de premières lamelles (3) et au moins un deuxième ensemble de lamelles ayant une pluralité de deuxièmes lamelles (4), dans laquelle chaque lamelle individuelle (3, 4) du premier et de l'au moins un deuxième ensemble de lamelles peut pivoter par rapport au boîtier (2) autour d'un axe de rotation s'étendant dans une première direction, en particulier une direction verticale,
dans laquelle les premières lamelles (3) du premier ensemble de lamelles et les deuxièmes lamelles (4) de l'au moins un deuxième ensemble de lamelles peuvent pivoter ensemble par rapport au boîtier (2) entre une première position dans laquelle les lamelles (3, 4) sont dans une position neutre et dans une deuxième position dans laquelle les lamelles (3, 4) sont pivotées dans une première direction de rotation à partir de leur position neutre et sont orientées obliquement par rapport à la direction d'écoulement principale (H) de la bouche d'aération (1) de sorte qu'une déviation d'air des lamelles (3, 4) dans une deuxième direction (W) est effectuée,
dans laquelle les premières lamelles (3) du premier ensemble de lamelles ou les premières lamelles (3) du premier ensemble de lamelles et les deuxièmes lamelles (4) de l'au moins un deuxième ensemble de lamelles peuvent en outre pivoter ensemble par rapport au boîtier (2) dans une troisième position dans laquelle les deuxièmes lamelles (4) de l'au moins un deuxième ensemble de lamelles sont pivotées dans la première direction de rotation à partir de leur position neutre et sont orientées obliquement par rapport à la direction d'écoulement principale (H) de la bouche d'air (1) de sorte que la déviation d'air provenant des deuxièmes lamelles (4) dans la deuxième direction (W) soit effectuée, et dans laquelle les premières lamelles (3) du premier ensemble de lamelles sont pivotées dans un deuxième sens de rotation à partir de leur position neutre et sont orientées obliquement par rapport à la direction d'écoulement principale (H) de la bouche d'aération (1) de sorte qu'une déviation de l'air provenant des premières lamelles (3) dans une direction opposée à la deuxième direction (W) est effectuée, dans laquelle la deuxième direction de rotation est différente de la première direction de rotation,
dans laquelle
pour la manipulation nécessaire de l'ensemble de lamelles, la bouche d'aération (1) a un élément de commande (5), en particulier une commande manuelle actionnable, qui est relié de manière opérationnelle via une cinématique aux premières lamelles (3) du premier ensemble de lamelles et aux deuxièmes lamelles (4) de l'au moins un deuxième ensemble de lamelles, dans laquelle la cinématique de la bouche d'aération (1) a un mécanisme de transfert, qui est configuré de manière à transférer un mouvement des premières lamelles (3) du premier ensemble de lamelles aux deuxièmes lamelles (4) de l'au moins un deuxième ensemble de lamelles, dans laquelle une fonction de transfert du mécanisme de transfert décrivant la dépendance du mouvement des deuxièmes lamelles (4) de l'au moins un deuxième ensemble de lamelles envers le mouvement des premières lamelles (3) du premier ensemble de lamelles est une fonction de transfert corrélée à une position de l'élément de commande (5),
dans laquelle la cinématique de la bouche d'aération (1) comprend ce qui suit :
- une première tige de couplage (6) associée aux premières lamelles (3) du premier ensemble de lamelles, tige avec laquelle les premières lamelles (3) sont reliées de manière opérationnelle de sorte que lorsque la première tige de couplage (6) est actionnée, et en particulier lorsque la première tige de couplage (6) est déplacée dans la deuxième direction (W) par rapport au boîtier (2) de la bouche d'aération (1), les premières lamelles (3) sont pivotées par rapport au boîtier (2) ; et
- une deuxième tige de couplage (7) configurée séparément de la première tige de couplage (6) et associée aux deuxièmes lamelles (4) de l'au moins un deuxième ensemble de lamelles, tige avec laquelle les deuxièmes lamelles (4) sont reliées de manière opérationnelle de sorte que lorsque la deuxième tige de couplage (7) est actionnée, et en particulier lorsque la deuxième tige de couplage (7) est déplacée dans la deuxième direction (W) par rapport au boîtier (2) de la bouche d'aération (1), les deuxièmes lamelles (4) sont pivotées par rapport au boîtier (2),
et dans laquelle
le mécanisme de transfert est configuré de manière à transférer un mouvement de la première tige de couplage (6) à la deuxième tige de couplage (7), dans laquelle une fonction de transfert du mécanisme de transfert décrivant la dépendance du mouvement de la deuxième tige de couplage (7) envers le mouvement de la première tige de couplage (6) est une fonction de transfert corrélée à une position de l'élément de commande (5), **caractérisé en ce que** le mécanisme de transfert comprend ce qui suit :
- un premier élément de levier (8) fixé ou configuré intégralement avec l'une des premières lamelles (3) du premier ensemble de lamelles, de préférence dans la zone de l'axe de rotation de la première lamelle correspondante (3) ;
- un deuxième élément de levier (9) fixé ou configuré intégralement avec l'une des deuxièmes lamelles (4) de l'au moins un deuxième ensemble de lamelles, de préférence dans la zone de l'axe de rotation de la deuxième lamelle correspondante (4) ; et
- un mécanisme de couplage via lequel le premier élément de levier (8) est couplé au deuxième élément de levier (9), une fonction de transfert du mécanisme de couplage décrivant la dépendance du mouvement du deuxième élément de levier (9) envers le mouvement du premier élément de levier (8) est une fonction de transfert corrélée à une position de l'élément de commande (5).

2. Bouche d'aération (1) selon la revendication 1,
dans laquelle les premières lamelles (3) du premier ensemble de lamelles et les deuxièmes lamelles (4) de l'au moins un deuxième ensemble de lamelles peuvent pivoter ensemble par rapport au boîtier (2) de la bouche d'aération (1) entre la première position et une quatrième position dans laquelle les lamelles (3, 4) pivotent dans la deuxième direction de rotation à partir de leur position neutre et sont orientées obliquement par rapport à la direction d'écoulement principale (H) de la bouche d'aération (1) de sorte qu'une déviation d'air provenant des lamelles (3, 4) dans une direction opposée à la deuxième direction (W) est effectuée ; et/ou
dans laquelle les premières lamelles (3) du premier ensemble de lamelles et les deuxièmes lamelles (4) de l'au moins un deuxième ensemble de lamelles peuvent pivoter ensemble par rapport au boîtier (2) de la bouche d'aération (1) dans une cinquième position dans laquelle les lamelles (3, 4) sont pivotées dans la deuxième direction de rotation à partir de leur position neutre de sorte que le canal d'air du boîtier (2) est sensiblement bloqué avec les lamelles (3, 4).

3. Bouche d'aération (1) selon la revendication 2,
dans laquelle la cinématique est configurée de sorte que :
- dans une première position de l'élément de commande (5), les premières lamelles (3) du premier ensemble de lamelles et les deuxièmes lamelles (4) de l'au moins un deuxième ensemble de lamelles sont chacune dans leur position neutre ;
- dans une deuxième position de l'élément de commande (5), les premières lamelles (3) du premier ensemble de lamelles et les deuxièmes lamelles (4) de l'au moins un deuxième ensemble de lamelles sont chacune dans leur deuxième position ;
- dans une troisième position de l'élément de commande (5), les premières lamelles (3) du premier ensemble de lamelles et les deuxièmes lamelles (4) de l'au moins un deuxième ensemble de lamelles sont chacune dans leur troisième position ;
- dans une quatrième position de l'élément de commande (5), les premières lamelles (3) du premier ensemble de lamelles et les deuxièmes lamelles (4) de l'au moins un deuxième ensemble de lamelles sont chacune dans leur quatrième position ; et
- dans une cinquième position de l'élément de commande (5), les premières lamelles (3) du premier ensemble de lamelles et les deuxièmes lamelles (4) de l'au moins un deuxième ensemble de lamelles sont chacune dans leur cinquième position ;
dans laquelle la quatrième position de l'élément de commande (5) se situe de préférence entre la première et la cinquième position de l'élément de commande (5) ; et/ou
dans laquelle la deuxième position de l'élément de commande (5) se situe de préférence entre la première et la troisième position de l'élément de commande (5).

4. Bouche d'aération (1) selon l'une quelconque des revendications 1 à 3,
dans laquelle le mécanisme de couplage a une tige de couplage (10), dans laquelle le premier élément de levier (8) est relié de manière rotative à une première zone d'extrémité de la tige de couplage (10) autour d'un axe de rotation s'étendant dans la première direction, dans laquelle le mécanisme de couplage a en outre un mécanisme de levier avec un premier levier (11) monté de manière rotative autour d'un premier axe de pivotement s'étendant dans la première direction et un deuxième levier (12) monté de manière rotative autour d'un deuxième axe de pivotement s'étendant dans la première direction, dans laquelle le premier levier (11) est relié de manière opérationnelle au deuxième levier (12) via un mécanisme de transmission (13) de sorte qu'une rotation du deuxième levier (12) autour du deuxième axe de pivotement est transférée au premier levier (11) de sorte qu'il est tordu autour du premier axe de pivotement, dans laquelle le premier levier (11) est relié de manière opérationnelle à une deuxième zone d'extrémité de la tige de couplage (10) autour d'un axe de rotation s'étendant dans la première direction, et dans laquelle le mécanisme de transmission (13) est de préférence formé par un couplage de dents.

5. Bouche d'aération (1) selon la revendication 4,
dans laquelle le premier axe de pivotement autour duquel le premier levier (11) du mécanisme à levier est monté de manière rotative est fourni dans la zone de l'axe de rotation de la deuxième lamelle correspondante (4) de l'au moins un deuxième ensemble de lamelles auquel ou avec lequel le deuxième élément de levier (9) est fixé ou configuré intégralement, et dans laquelle, de préférence, le premier axe de pivotement autour duquel le premier levier (11) du mécanisme de levier est monté de manière rotative se conforme à l'axe de rotation de la deuxième lamelle correspondante (4) de l'au moins un deuxième ensemble de lamelles auquel ou avec lequel le deuxième élément de levier (9) est fixé ou configuré intégralement.

6. Bouche d'aération (1) selon la revendication 4 ou 5,
dans laquelle le deuxième levier (12) du mécanisme de levier est monté au ou sur le deuxième élément de levier (9) de manière rotative par rapport au deuxième élément de levier (9), dans laquelle le deuxième levier (12) est associé à un élément de sollicitation (14), en particulier sous la forme d'un élément de ressort, qui sollicite le deuxième levier (12) contre une première butée (15) du deuxième élément de levier (9), de sorte que lors d'une rotation du deuxième levier (12), le deuxième élément de levier (9) est mis en rotation autour d'un axe de rotation s'étendant dans la première direction, dans laquelle une deuxième butée (16) de préférence reliée au boîtier (2) de la bouche d'aération (1) est associée au deuxième élément de levier (9) pour la limitation d'un mouvement de rotation du deuxième élément de levier (9) autour de l'axe de rotation s'étendant dans la première direction,
dans laquelle un mécanisme d'encliquetage est de préférence fourni pour le verrouillage de manière libérable du premier ou du deuxième levier (11, 12) sur le deuxième élément de levier (9) lorsque les premières lamelles (3) du premier ensemble de lamelles et les deuxièmes lamelles (4) de l'au moins un deuxième ensemble de lamelles sont dans leur troisième position, dans laquelle le mécanisme d'encliquetage a de préférence une pièce de pression à ressort (18) associée au premier ou au deuxième levier (11, 12), en particulier, ou le deuxième élément de levier (9), ladite pièce de pression étant configurée de manière à s'encliqueter dans un évidement (19) en particulier du deuxième élément de levier (9) ou du premier ou du deuxième levier (11, 12) lorsque les premières lamelles (3) du premier ensemble de lamelles et les deuxièmes lamelles (4) de l'au moins un deuxième ensemble de lamelles sont dans leur troisième position.

7. Bouche d'aération (1) selon la revendication 4 ou 5,
dans laquelle le mécanisme de levier comprend un troisième levier (21) supporté de manière pivotante autour du premier axe de pivotement du premier levier (11), dans laquelle le deuxième levier (12) est relié de manière opérationnelle au deuxième élément de levier (9) via un deuxième mécanisme d'engrenage (17) de sorte qu'une rotation du deuxième levier (12) autour du deuxième axe de pivotement est transférée au deuxième élément de levier (9),
dans laquelle le deuxième
mécanisme d'engrenage (17) est de préférence formé par un couplage de dents, et dans laquelle le rapport d'engrenage du deuxième mécanisme d'engrenage (17) est de préférence différent du rapport d'engrenage du mécanisme d'engrenage (13) via lequel le premier levier (11) est relié de manière opérationnelle au deuxième levier (12).

8. Bouche d'aération (1) selon la revendication 7,
dans laquelle le troisième levier (21) du mécanisme de levier est monté de manière rotative par rapport au deuxième levier (12), dans laquelle le deuxième levier (12) est associé à un élément de sollicitation (14), en particulier sous la forme d'un élément de ressort, qui sollicite le deuxième levier (12) contre une première butée (15) du troisième levier (21), dans laquelle une deuxième butée (16) reliée au boîtier (2) de la bouche d'aération (1) est de préférence associée au troisième levier (21) pour la limitation d'un mouvement de rotation du troisième levier (21) autour du premier axe de pivotement du premier levier (11),
dans laquelle un mécanisme d'encliquetage est de préférence fourni pour verrouiller de manière libérable le premier ou le deuxième levier (11, 12) ou le deuxième élément de levier (9) sur le troisième levier (21) lorsque les premières lamelles (3) du premier ensemble de lamelles et les deuxièmes lamelles (4) du deuxième ensemble de lamelles sont dans leur troisième position, dans laquelle le mécanisme d'encliquetage a de préférence une pièce de pression à ressort (18) associée au premier, au deuxième, ou au troisième levier (11, 12, 21), en particulier, ou au deuxième élément de levier (9), ladite pièce de pression étant configurée pour s'encliqueter dans un évidement (19) en particulier du premier, du deuxième, ou du troisième levier (11, 12, 21) ou du deuxième élément de levier (9) lorsque les premières lamelles (3) du premier ensemble de lamelles et les deuxièmes lamelles (4) du deuxième ensemble de lamelles sont dans leur troisième position.

9. Bouche d'aération (1) selon l'une quelconque des revendications 4 à 8,
dans laquelle la cinématique de la bouche d'aération (1) a un élément d'entraînement (22) relié de manière opérationnelle à l'élément de commande (5) d'une part et au deuxième levier (12) du mécanisme de levier d'autre part, qui est configuré de manière à transférer un couple correspondant au deuxième levier (12) du mécanisme de levier lors de l'actionnement de l'élément de commande (5).

10. Bouche d'aération (1) selon l'une quelconque des revendications 1 à 9,
dans laquelle la cinématique est configurée de sorte que :
- dans une première position de l'élément de commande (5), les premières lamelles (3) du premier ensemble de lamelles et les deuxièmes lamelles (4) de l'au moins un deuxième ensemble de lamelles sont disposées par rapport à la direction d'écoulement principale (H) de la bouche d'aération (1) de sorte que les lamelles (3, 4) sont dans leur position neutre et la bouche d'aération (1) est dans sa position en ligne droite ;
- dans une deuxième position de l'élément de commande (5), les premières lamelles (3) du premier ensemble de lamelles et les deuxièmes lamelles (4) de l'au moins un ensemble de lamelles sont chacune pivotées par rapport à la direction d'écoulement principale (H) de la bouche d'aération (1) dans la première direction de rotation de sorte qu'une déviation d'air des lamelles (3, 4) dans la deuxième direction (W) est effectuée ;
- optionnellement, dans une troisième position de l'élément de commande (5), les premières lamelles (3) du premier ensemble de lamelles sont pivotées dans la deuxième direction de rotation par rapport à la direction d'écoulement principale (H) de la bouche d'aération (1) de sorte qu'une déviation d'air des premières lamelles (3) du premier ensemble de lamelles dans la direction opposée à la deuxième direction (W) est effectuée, et les deuxièmes lamelles (4) de l'au moins un deuxième ensemble de lamelles sont pivotées dans la première direction de rotation par rapport à la direction d'écoulement principale (H) de la bouche d'aération (1) de sorte qu'une déviation d'air provenant des deuxièmes lamelles (4) de l'au moins un deuxième ensemble de lamelles dans la deuxième direction (W) est effectuée ;
- Dans une quatrième position de l'élément de commande (5), les premières lamelles (3) du premier ensemble de lamelles et les deuxièmes lamelles (4) de l'au moins un deuxième ensemble de lamelles sont pivotées ensemble par rapport à la direction d'écoulement principale (H) de la bouche d'aération (1) dans la deuxième direction de rotation opposée à la première direction de rotation de sorte qu'une déviation d'air provenant des lamelles (3, 4) dans la direction opposée à la deuxième direction (W) est effectuée, et
- optionnellement, dans une cinquième position de l'élément de commande (5), les premières lamelles (3) du premier ensemble de lamelles et les deuxièmes lamelles (4) de l'au moins un ensemble de lamelles sont pivotées ensemble par rapport à la direction d'écoulement principale (H) de la bouche d'aération (1), en particulier dans la deuxième direction de rotation, de sorte que le canal d'air du boîtier (2) est au moins sensiblement bloqué avec les lamelles (3, 4) .

11. Bouche d'aération (1) selon la revendication 10,
dans laquelle, dans la première position de l'élément de commande (5), les premières lamelles (3) du premier ensemble de lamelles, et les deuxièmes lamelles (4) de l'au moins un deuxième ensemble de lamelles sont alignées de sorte à converger les unes avec les autres lorsqu'elles sont vues dans la direction d'écoulement principale (H) ; et/ou dans laquelle, dans la deuxième position de l'élément de commande (5), les premières lamelles (3) du premier ensemble de lamelles et les deuxièmes lamelles (4) de l'au moins un ensemble de lamelles sont alignées de sorte à converger les unes avec les autres lorsqu'elles sont vues dans la direction d'écoulement principale (H) ; et/ou dans laquelle, dans la troisième position optionnelle de l'élément de commande (5), les premières lamelles (3) du premier ensemble de lamelles et les deuxièmes lamelles (4) de l'au moins un deuxième ensemble de lamelles sont alignées de sorte à diverger les unes des autres lorsqu'elles sont vues dans la direction d'écoulement principale (H) ; et/ou dans laquelle, dans la quatrième position de l'élément de commande (5), les premières lamelles (3) du premier ensemble de lamelles et les deuxièmes lamelles (4) de l'au moins un deuxième ensemble de lamelles sont alignées de sorte à converger les unes avec les autres lorsqu'elles sont vues dans la direction d'écoulement principale (H).
